# EUROPEAN PATENT SPECIFICATION

(11) **EP 3 641 600 B1**
(45) Date of publication and mention of the grant of the patent: **06.09.2023**
(21) Application number: 18819787.5
(22) Date of filing: 20.06.2018
(51) Int. Cl.: E04F 15/10, A47G 27/04, B32B 21/04, B32B 21/08

(54) **MODULAR MAGNETICALLY RECEPTIVE WOOD AND ENGINEERED WOOD SURFACE UNITS AND MAGNETIC BOX SYSTEM FOR COVERING FLOORS, WALLS, AND OTHER SURFACES**
MODULARE OBERFLÄCHENEINHEITEN AUS MAGNETISCH EMPFÄNGLICHEM HOLZ UND MANIPULIERTEM HOLZ UND MAGNETKASTENSYSTEM ZUR ABDECKUNG VON BÖDEN, WÄNDEN UND ANDEREN OBERFLÄCHEN
UNITÉS DE SURFACE MODULAIRES EN BOIS MODIFIÉ ET EN BOIS À RÉCEPTION MAGNÉTIQUE ET SYSTÈME DE BOÎTE MAGNÉTIQUE POUR RECOUVRIR SOLS, MURS ET AUTRES SURFACES

(30) Priority: 20.06.2017 US 201762522513 P; 29.03.2018 US 201862650228 P
(43) Date of publication of application: 29.04.2020
(73) Proprietor: Golconda Holdings LLC, Bay St. Louis, MS 39520 (US)
(72) Inventor: LAUTZENHISER, Lloyd L., Verdi, NV 89439 (US); LEBLANC, Shane S., Bay St. Louis, MS 39520 (US); LEBLANC, Melinda, Bay St. Louis, MS 39520 (US); HUANG, Li, Knoxville, TN 37934 (US)
(74) Representative: Carter, Stephen John
(86) International application number: PCT/US2018/038637
(87) International publication number: WO 2018/237096

(56) References cited:
- EP-A1- 0 653 179
- EP-A1- 1 830 014
- WO-A1-2017/197503
- WO-A2-2016/160739
- US-A- 3 401 129
- US-A- 3 982 370
- US-A- 4 744 189
- US-A1- 2017 355 837

## Description

### FIELD OF THE INVENTION

The present invention pertains to the art of floor coverings, and, more particularly to an apparatus for use in securing floor covering units to an underlay and a method of manufacturing said floor covering units and said underlay. The present invention also pertains to the art of wall coverings, and, more particularly to an apparatus for use in securing wall covering units to an underlay and a method of securing an underlay to a wall board.

### BACKGROUND

In the field of wall coverings, the process of constructing wall coverings is time consuming, expensive, and messy. In typical residential and commercial buildings, a frame is erected for interior walls. On this frame a set of gypsum, sheetrock, or drywall boards are typically hung. These drywall boards are attached with screws or nails to the frame, which may be metal or wood. The boards must then be finished prior to painting. The finishing process for drywall boards typically involves mudding and taping. Mudding involves applying a wet-mix compound to mesh or paper tape that has been applied to the seams of the drywall board. The seams and edges must then be sanded prior to finishing. The finishing of drywall boards typically involves priming the surface with a primer type paint and then painting on the final wall cover on the primed surface. This process creates particulate dust contaminants that are difficult to clean and control. The process also may create an undesirable chemical smell due to volatile organic compounds ("VOCs") present in the paint, primer, and drywall boards.

Other methods of finishing a wall include: using wood boards or panels including "ship-lap" style panels; applying stone, masonry, or brick; applying wall-paper using glue and a decorated paper roll; applying wall trim pieces; and securing thin wooden boards and applying a plaster coating. For any of these methods, it may also be desirable to insulate the wall by placing an insulation layer for thermal or acoustic insulation behind the finished wall. Insulating is an additional step that must be completed prior to finishing the wall and may be time consuming and messy.

For all of the above-mentioned methods, replacing the covering may be difficult and time consuming. Replacing a masonry wall covering, for example, requires extensive demolitions and clean-up. Replacing wall-paper may require replacing the drywall board the paper is secured to. Many of the above methods require destructive removal to replace.

Wooden Floors or Wall Coverings made from wood have been used as floor and wall coverings for millennia. Wooden Floors have an appeal (due to being natural) to the eye and have been a mainstay construction finish material dating back eons. Since Wooden Floors and Engineered Wooden floors are natural materials, their performance when subjected to sustained exposure to moisture leads to many failures of these floor covering products. Moisture will cause swelling, warping, cupping at the ends of the planks, adhesive failure of the bond between the substrate and the wooden planks, and gaps between the planks leading to product failure and uneven floors.

The most common methods to bond these wooden products to their substrate is to either use an adhesive or to nail or staple the planks to the substrate. Wooden planks also have a milled tongue and groove system or other locking system made into the product to help stabilize the board and to ensure a tight fit that will hold the planks together with the ultimate purpose of trying to ensure that there are no gaps between the planks which would be esthetically undesirable and potentially dangerous.

With the use of tongue and groove or other locking systems, one must lay these boards adjacent to each other as one plank has the tongue while the other has the groove. It is extremely labor intensive to utilize patterns that are not straight such as a herring bone or other 45 degree or inset patterns with this system.

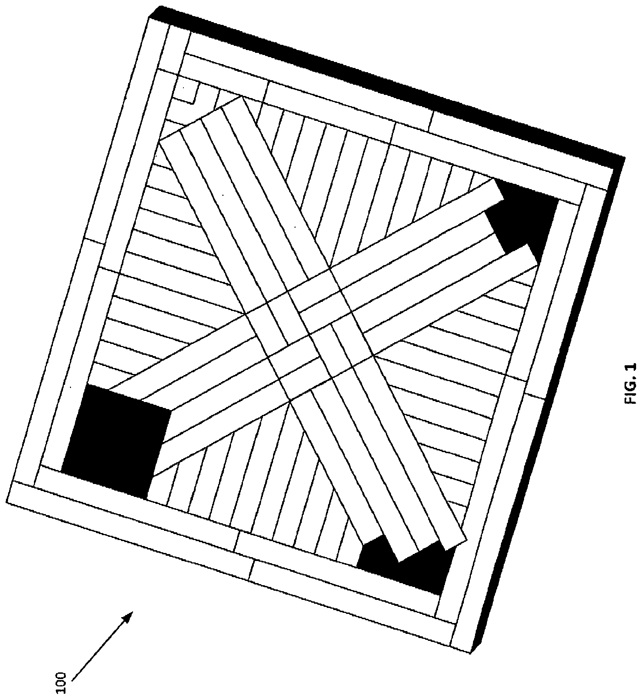

FIG. 1 provides a perspective view of an intricate flooring pattern using the Magnetic Box System.

Typically, in the field upon installation, the flooring mechanic must remove the tongue and groove or locking system one by one by hand, and figure out a way to secure the planks to each other causing varying problems and high labor costs.

Systems and methods for installing interchangeable magnetic floors and walls are disclosed in at least SYSTEM, METHOD, AND APPARATUS FOR MAGNETIC SURFACE COVERINGS, by Lautzenhiser et al., U.S. Application No. 15/083,225, filed March 28, 2016; and SYSTEM, METHOD, AND APPARATUS FOR MAGNETIC SURFACE COVERINGS, by Lautzenhiser et al., U.S. Application No. 15/083,231, filed March 28, 2016; both of which claim priority to U.S. Provisional Patent Applications U.S Provisional Patent App. No. 62/139,226, entitled SYSTEM, METHOD, AND APPARATUS FOR THE MANUFACTURE AND INSTALLATION OF MAGNETIC FLOOR COVERING UNITS AND MAGNETIC UNDERLAYS, by Lautzenhiser et al., filed March 27, 2015; and to U.S Provisional Patent App. No. 62/258,432, entitled SYSTEM AND METHOD FOR MAGNETIC WALL COVERING UNITS AND MAGNETIC UNDERLAYS, by Lautzenhiser et al., filed November 21, 2015; and U.S. Provisional Patent App. No. 62/650,228, entitled SYSTEM AND METHOD FOR PRODUCING A RUST-RESISTANT AND DIMENSIONALLY STABLE MAGNETICALLY RECEPTIVE SHEET GOOD FOR USE IN SURFACE COVERING SYSTEMS, by LeBlanc et al., filed March 29, 2018. US 3,401,129 and EP 0653179 describe further examples of modular floor coverings. A magnetically receptive surface covering unit in accordance with the preamble of claim 1 is known from WO 2016/160739 A2. Further similar surface coverings are known from EP 0 653 179 A1 and US 3 401 129 A.

In the following, use is made of imperial units as well as metric SI units. For converting the imperial units to SI units it is noted that 1" = 1 inch = 25,4 mm, 1' = 1 foot = 304,8 mm, 1 mile = 1,609 km (approx.), 1 1b = 1 pound = 453,6 g (approx.), 1 psi = 0,070307 kg/cm², x °F = ((x-32)^{∗}5/9) °C.

### Wood and Moisture related issues from Wood when used as a flooring (or wall) covering finish layer

### The Natural Product: The Tree:

The basics: A tree grows with roots in the ground and leaves in the air. The roots collect moisture and nutrients from the soil and ship them through vessels or fibers up the trunk and branches to the leaves. These vessels are similar to the "strings" in a stalk of celery. The leaves mix the moisture, nutrients, carbon dioxide, sunlight and photosynthesis produces oxygen that releases into the atmosphere and food for the tree. The "food" is then shipped through other vessels, throughout the tree and back to the roots and growth occurs.

A tree is made up of fibers aligned vertically in the standing tree. Cut the tree down and the fibers are horizontal. Saw boards and manufacture plank flooring, glue, nail or staple the planks down to a substrate, and the fibers are still horizontal and running the length of the boards.

In the standing tree, the fibers are loaded with moisture. The tree, after felling, begins to dry out, just like a rose wilts after being picked. As the fibers dry, they shrink in thickness or diameter, almost none lengthwise. This shrinkage, characteristic of all woods is of vital importance in the understanding of flooring.

While the figures used below as an example are not accurate, they help to understand the nature of the raw material which is wood.

A tree is felled and immediately sawed immediately into a board 1 " thick, 10" wide and 8' long. Placed on a scale, the board weighs 100 pounds.

This same wooden board is placed in a stack of boards separated from its neighbor by stacking strips of uniform size to keep the board straight. The stack is aimed at the prevailing breezes to accelerate drying. The board stays in the stack for four to six months and then the board is reweighed. It now weighs-50 pounds. Fifty pounds of water has evaporated.

There are times today a mill must reach out 200 to 300 miles for lumber. With high rail and truck freight costs, the need for air drying and not paying freight on water is obvious. There must be this time allowed, thereby making it difficult for the flooring industry to immediately respond to an upsurge in demand. Also, with today's raw lumber cost, the flooring manufacturer must have enough capital to buy lumber and let several millions of dollars sit in a field doing nothing but drying.

The 50-pound board is trucked to the flooring manufacturer and loaded into a dry kiln. The kiln is a concrete building many times large enough to hold 3 or 4 railroad box carloads of lumber. Within the kiln there are fans to circulate the air, steam pipes to create heat, and live steam to induce moisture. The next process is to gradually lower the humidity and increases the temperature over a five to seven-day period until the board reaches the optimum moisture content for flooring manufacture of about 8%. This Moisture Content also varies by region and must be gaged accurately. During the process the temperature in the center of the board must reach 105°F to sterilize the eggs of the Lyctus insect who likes to eat oak floors (typical in North American Oak). The board is then cooled, and measured for weight, which is now 42lbs.

### Controlling Moisture Content is Most Important with the existing methods of wood flooring:

If this same board was further processed in an autoclave, or oven, into which we could place the whole board and dry every bit of moisture out of the wood, the board would weigh 40 pounds, but the 2 pounds of moisture remaining in the wood keeps the wood "alive" and flexible.

Precision kiln-drying and the resulting moisture content (M.C.) is one of several primary responsibilities of the flooring manufacturer. The correct M.C. makes flooring predictable. Violate the M.C. and all kinds of things happen. Dry oak flooring (made from these dry boards) is like a blotter. The boards want to regain some of their lost moisture. Everyone involved i.e., manufacturer, distributor' retailer' truck driver, builder, installer, housekeeper, and owner-have the responsibility to keep oak floors dry. Wood expands and contracts across the grain with moisture change.

Originally, the example board weighed 100 pounds and measured 1 x 10"- 8 ft. The vessels and fibers were full of moisture. Now' after drying, the board weighs only 42 pounds and measures ¾" to 7/8" x 9 1/8" -8ft.

The board has withered just like the hypothetical rose mentioned above. Each vessel and fiber is smaller in diameter or width and has shriveled up. Therefore, the board is narrower and thinner, but not shorter.

As an example, the vessels in the wood act as soda straws. Introduce dampness or moisture to the floor and the moisture will be drawn into the end grain (vessel ends) quickly. The fibers will accept this moisture and start to swell or fluff up. If the moisture is of short-lived nature, the ends of its boards will swell, get wider, and display what the industry calls "fishtail" (for obvious reasons). Long-term dampness will cause all the boards to swell, called "expansion". An expanded floor, given a chance to dry out, displays "shrinkage" and results in cracks between boards, as well as cupping, crowning or buckling. In these failures, they are all very costly to correct and most of the time the floor must be completely removed because it would be costlier to correct then to completely abate and start with new material.

As stated above, the traditional methods of Installation are to adhere with adhesive, nail, staple, and a locking system. Some Installations require all of these methods in one installation.

### Engineered Hardwood:

Engineered wood floors are built having 3-12 multiple ply layers (see picture below) that are cross layered, glued and pressed together. The top thicker hardwood veneer wear layer is then glued and pressed on the top surface of the plywood, solid wood or combination of both core. Engineered Hardwood is more resistant to moisture and heat than traditional solid hardwood but is typically just as thick to resist the aforementioned problems.

Another drawback of both Hardwood and Engineered Hardwood is the Tongue and Groove or Locking system itself. Not only are there cost factors in milling these into both products but typically there is an air cavity or void that is either present in the original design, or due to contraction a void becomes present. A void is typically what makes a Hardwood or Engineered Hardwood squeak, which leads to countless warranty claims and is highly undesirable.

Further, the bottom of the plank for solid hardwood and engineered hardwood typically has a milled pattern or groove much like a ceramic tile. The purpose of this notch is to make sure that when adhering the plank to the substrate, whether that be a wall or a floor, is to maximize adhesive spread. This leads to human error as one must rely on the skillset of the installer and can also leave voids if not done correctly leading to potential for squeaking floors.

However, with the existing systems and methods for installing floor covering units, and the systems and methods for producing such installation systems, there exist issues when combining different material types and in producing the necessary system components. Existing systems may not be sufficiently dimensionally or structurally stable to be optimally suited for high traffic or use conditions, such as in commercial applications. The materials and production processes used to make existing floor covering systems may not produce floor covering units and installation materials with the desired durability and stability required for commercial applications and long-term installation.

What is needed is the Interchangeable Box System to drastically reduce raw materials, interchangeability, and the associate problems of conventional manufacture and installation methods. Embodiments for brand new flooring categories utilizing the interchangeable Box System are now possible for the first time. Mwood (Magnetic Wood) and MEwood (Magnetic Engineered Wood).

What is needed is a system and method for producing and installing modular floor covering units that is compatible with a wide range of floor covering material and supporting surface types and compositions. Additionally, what is needed is a system and method for producing and installing modular floor covering units that are dimensionally and structurally stable.

### SUMMARY OF THE INVENTION

The present invention provides a magnetically receptive surface covering unit as set forth in claim 1.

The present invention provides a removable, semi-permanent magnetic surface covering system as set forth in claim 11.

The magnetically receptive layers and magnetic underlayments of the present invention are better suited to installation in residential and commercial applications than the systems and methods disclosed in the prior art and provide benefits including increased durability, improved dimensional stability, and wider material compatibility than those used in known surface covering systems.

The materials, compounds, and processes used in the production of the magnetically receptive layers and magnetic underlayments of the present invention provide a significant improvement over the systems and methods of the prior art.

The ferrite compound may be strontium ferrite, the polymer may be chlorinated polyethylene elastomer polymer (CPE), and the plasticizer may be epoxidized soybean oil (ESBO). The strontium ferrite may comprise a particle size of 38-62 microns. The outer surface protectant layer may be one of a UV protectant layer or a urethane coating. The primary layer may comprise a hardwood layer. The primary layer may comprise a hardwood wear layer and a ply layer. The surface covering unit may comprise a cushion layer. The primary layer may comprise a wear layer and a polymer layer. The surface covering unit may further comprise a flexible chlorinated polyethylene and iron ferrite sheet layer. The surface covering unit may comprise a fiberglass layer. The composition of the magnetically receptive layer may be selected from the group consisting of: pure iron powder (Fe) approximately 84%, chlorinated polyethylene elastomer polymer (CPE) approximately 15% and epoxidized soybean oil (ESBO) approximately 8%; Iron powder (Fe3O4) 90%, CPE 9% and plasticizer 1%; Mn-Zn (manganese/zinc) soft ferrite powder 90%, CPE 9% and plasticizer 1%; 20 portions of CPE, 150 portions of stainless iron powder; 30 portions of polyvinyl chloride, 18 portions of dioctyl terephthalate, 200 portions of stainless iron powder; or PVC 16.5%, calcium carbonate 39%, iron powder 26.5%, plasticizer 16%, and viscosity depressant & stabilizer 2%. protectant layer or a urethane coating. The primary layer may comprise a hardwood layer. The primary layer may comprise a hardwood wear layer and a ply layer. The surface covering unit may further comprise a cushion layer. The primary layer may comprise a wear layer and a polymer layer. The surface covering unit includes a flexible chlorinated polyethylene and iron ferrite sheet layer. The surface covering unit may further comprise a fiberglass layer.

### BRIEF DESCRIPTION OF THE DRAWINGS

In order to facilitate a full understanding of the present invention, reference is now made to the accompanying drawings, in which like elements are referenced with like numerals. These drawings should not be construed as limiting the present invention, but are intended to be exemplary and for reference.
FIG. 1 provides a perspective view of an intricate pattern of magnetic floor covering units.
FIGs. 2-11 provide simplified cross-sectional views of embodiments of modular wood, hardwood, Mwood, or MEwood floor covering units, the embodiments 1, 2 and 5 represented on Fig. 2-7 and 10 being examples helpful for the understanding of present invention, and embodiments 3, 4 and 6 represented on Fig. 8, 9 and 11 being embodiments according to the present invention.
Figure 12 is a representation of a molecule of strontium ferrite.
Figure 13is a representation of a molecule of chlorinated polyethylene.
Figure 14 is a representation of a epoxidized soybean oil.
Figure 15 is a flowchart diagram of an embodiment of production process for a magnetized or magnetically receptive sheet good at atmospheric pressure.
Figure 16 is a flowchart diagram of an embodiment of production process for a magnetized or magnetically receptive sheet good at a pressure other than atmospheric pressure.
Figure 17 is a flowchart diagram an embodiment of production process for a magnetized or magnetically receptive material for use in a backing material layer.
Figure 18 is a simplified perspective diagram of a modular surface covering unit with a magnetically receptive layer and a magnetic underlayment disposed on a supporting surface.
Figure 19 is a perspective view of an interchangeable box system comprising modular floor and wall covering units in accordance with an embodiment of the present invention.

### DETAILED DESCRIPTION

The present invention will now be described in more detail with reference to exemplary embodiments as shown in the accompanying drawings. While the present invention is described herein with reference to the exemplary embodiments, it should be understood that the present invention is not limited to such exemplary embodiments. Those possessing ordinary skill in the art and having access to the teachings herein will recognize additional implementations, modifications, and embodiments, as well as other applications for use of the invention, which are fully contemplated herein as within the scope of the present invention as disclosed and claimed herein, and with respect to which the present invention could be of significant utility.

Utilizing the Interchangeable Box System, The Underlayment in the Interchangeable Box System is a waterproof membrane between the substrate and the Wooden Flooring Unit. the Underlayment prevents moisture from permeating from the subfloor. The receptive layer that is adhered onto the backside of the wooden plank in the Interchangeable Box System also serves as a moisture barrier from subfloor moisture.

In the previous art, when water or moisture (humidity) is introduced from above or below (from concrete sweating or other potential subfloor moisture problems) for a prolonged period of time, it permeates the full thickness of the flooring unit. This causes tremendous expansion that exerts a stronger force then the force of the prior installation methods of adhesives, nail, locking system, tongue and groove or staple. This swelling often causes catastrophic failure of the flooring unit, typically destroying not only the installation but the flooring unit itself.

The tendency for all manufactured wooden flooring units whether they are solid or engineered utilize the ¾' to 1' thickness to try and fight moisture. The thickness itself resists minor moisture related problems, but traditionally when there is a moisture issue problem it is long term, and the actual thickness of the wooden flooring unit itself is the reason for the tremendous swelling forces; in essence there is more material to swell. A thick flooring unit is a compromise for short term moisture vs. long term moisture.

Utilizing the Interchangeable Box System, the Mwood or MEwood only has potential moisture from above and not below. Utilizing a much thinner Mwood or MEwood that may be ¼" thick will minimize the swelling force in the worst of conditions. The Underlayment of the Interchangeable Box System produces a greater force than the swelling force keeping the flooring unit in place. There is also no need for a tongue and groove or other locking system as the magnetic force of the Underlayment does not allow the boards to move.

The use of the Interchangeable Box System, dramatically reduces the potential for moisture issues and solves the other issues in the prior art. Since there is no need for adhesive or a tongue and groove or locking system, the potential of the flooring unit to squeak will be drastically reduced.

A further environmental benefit Mwood or MEwood provides utilizing the Interchangeable Box System, is a drastic reduction of raw material wood in the flooring unit. This reduction using ¼" thickness as an embodiment may reduce raw material wood by 2/3^{rd}.

A further Industry benefit for Mwood or MEwood would be the ability to produce more flooring units from existing inventories allowing for less capital investment in boards that must sit to dry or the ability to ramp up production to meet demand.

A further manufacturer benefit would for utilizing Mwood or MEwood would be the ability to not have to mill a tongue and a groove, other locking systems, or glue notches to the back of the prior art flooring units.

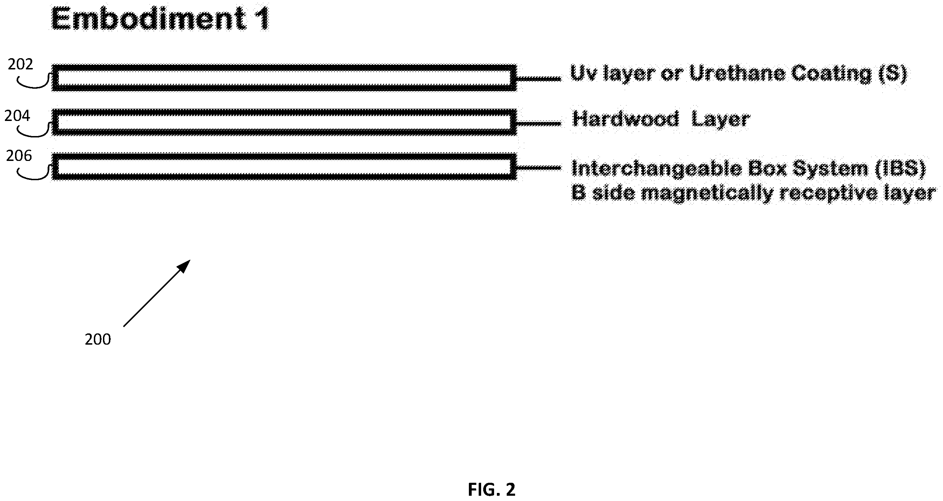

In FIG. 2, for the floor covering unit 200, the Plank Wood for Solid Hardwood 204 is put through the drying and kiln process as stated above. The larger plank is then cut to into the standard flooring unit sizes for length and width. The thickness may approximately be decreased to ¼" saving 2/3^{rd} of the prior art raw material of wood. The standard sanding process, finishing coat process for a finishing coat 202 would remain the same. No tongue or groove, locking system or adhesive notches would be milled into the flooring unit. A magnetically receptive sheeting 206 that may be 0.3mm in thickness would be adhered to the flat back of the Mwood using an adhesive and rollers.

In another embodiment of FIG. 2, Mwood (going through the same process as the last embodiment) the receptive material would be cold pressed into the solid wood plank. Additionally, a bevel on the top edge on one side or both sides can be milled to create the look of a slight gap that traditionally is present in the prior art and is visually appealing to the consumer.

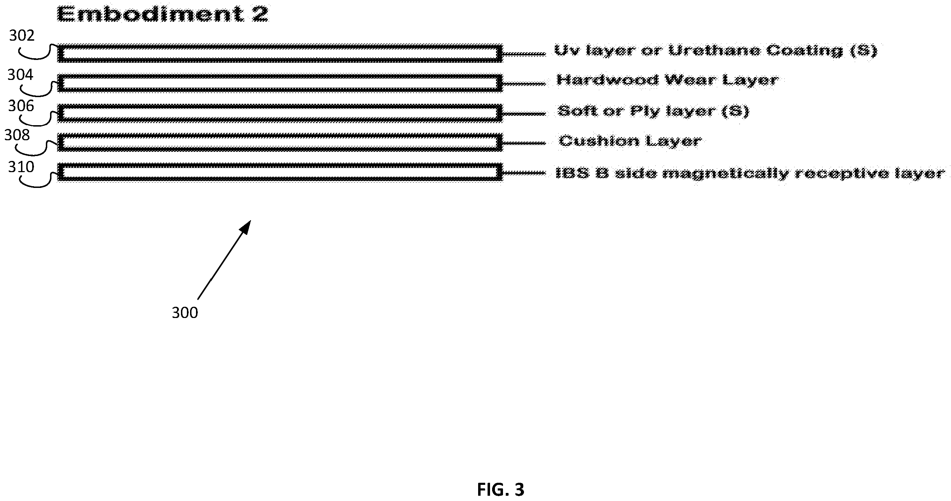

In FIG. 3, a floor covering unit 300 comprising an Mwood would have an additional cushion layer 308 and/or soft or ply layer 306 attached to the hardwood layer 304. This layer 308 could be made from various cushioning materials such as cork, cushioning, PVC and the like. The plank 300 would further comprise the coating 302 and magnetically receptive layer 310.

### Engineered MEwood:

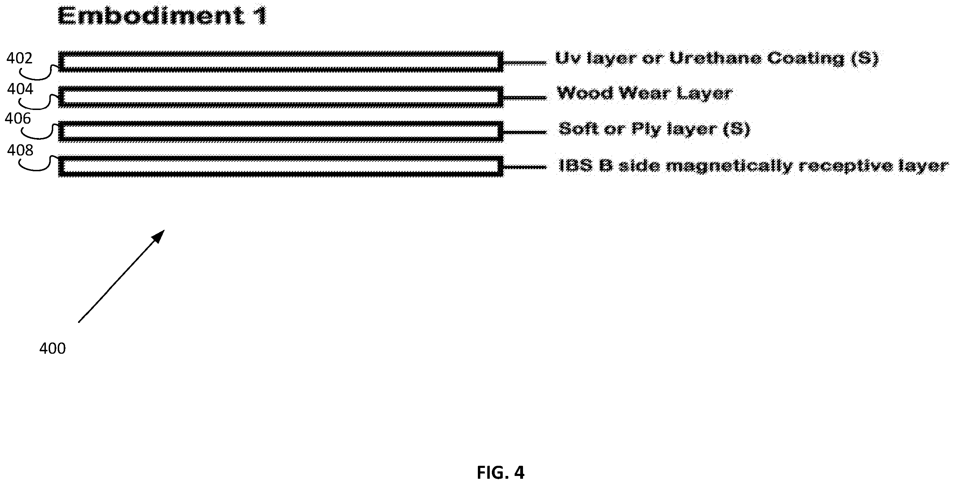

In another embodiment of the system, shown in FIG. 4, MEwood 400, may have only 3 to 5 multiple ply layers that are cross layered, glued and pressed together. The inner core layers 406 may be built up with either a hardwood and/or soft plywood type of material. A solid wood veneer layer 404 is then glued to the core ply layers 406. No tongue or groove, locking system or adhesive grooves will be milled in this embodiment. A magnetically receptive sheeting 408 that may be 0.3mm in thickness would be adhered to the flat back of the Mwood 400 using an adhesive and rollers. A coating 402 may be applied.

Another embodiment of MEwood (going through the same process for MEwood) the receptive material would be cold pressed as the last layer underneath the ply's and veneer layer for a finished flooring unit. Additionally, a bevel on the top edge on one side or both sides can be milled to create the look of a slight gap that traditionally is present in the prior art and is visually appealing to the consumer.

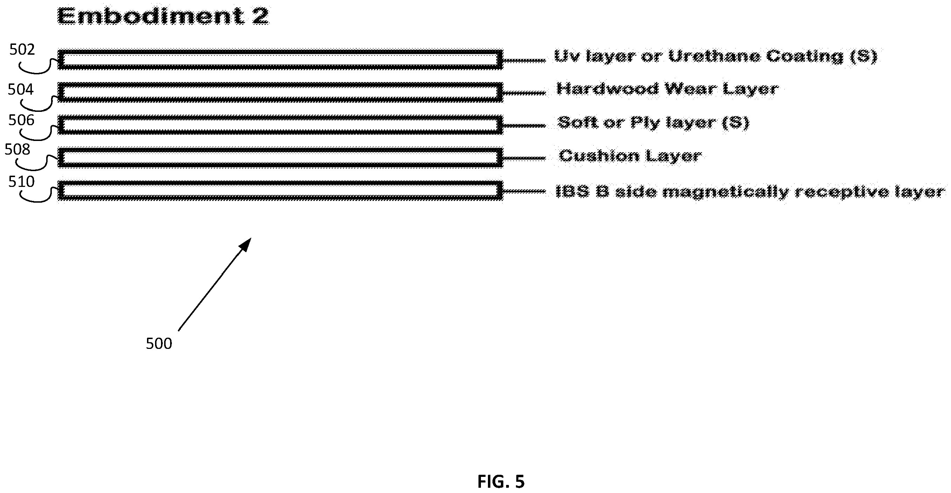

In another embodiment of the system shown in FIG. 5, MEwood 500 would have an additional cushion layer 508 attached to the hardwood layer comprising the ply layer 506 and wear layer 504. This layer 508 could be made from various cushioning materials such as cork, cushioning PVC or other materials that add cushioning properties. The plank 500 would further comprise the coating 502 and magnetically receptive layer 510.

Because of the Interchangeable Box System, the same flooring unit may also act as a wall finish board. Since the Interchangeable Box System allows all construction materials to be Quasi permanent Mwood or MEwood can be utilized on a floor, wall or ceiling construction as the finish coat of the Interchangeable Box System.

Mwood and MEwood may be mixed together to form a complicated flooring pattern with greatly reduced labor. The same flooring material may be utilized as a wall covering in another location. The pieces or elements of Mwood and MEwood may be numbered and easily moved or relocated like pieces of a jigsaw puzzle.

### "Hybrid" Resilient Flooring Unit Utilizing the Magnetic Box System

### Laminate Type Flooring Unit Background:

Laminate flooring was invented in or around 1977 by the Swedish company Perstorp Ab, and sold under the brand name Pergo. They had been making floor surfaces since 1923. The company first marketed its product to Europe in 1984, and later to the United States in 1994. Perstorp spun off its flooring division as a separate company named Pergo, now a subsidiary of Mohawk Industries. The product is described in at least Publication number DE7807870 U1, Application number DE19787807870, Publication date Jul 6, 1978, Filing date Mar 15, 1978, Priority date Apr 1, 1977, Applicant: Perstorp, Ab.

The original Laminate or Resilient (Dubbed Resilient due to its Durability) flooring, is a multi-layer synthetic flooring unit fused together with a lamination process. The original "laminate" flooring units were/are made from a composite material called high density fiberboard (HDF), which is more susceptible to water damage than natural wood. Typically, when HDF is exposed directly to standing water, it breaks down and expands; it is not dimensionally stable. Once that happens, a laminate floor will expand and buckle and warp like traditional solid wood and engineered flooring units and must be replaced. This limits the areas where laminate can be installed, ruling out places like bathrooms where regular exposure to water is commonplace. Demand was created for this product because it was much cheaper than hardwood or engineered hardwood flooring units.

Realizing this prior arts drawbacks, new materials and methods replaced the HDF core to other Polyvinylchloride (PVC) type layers. Although there are many variations of the laminated layers, the following is the basic flooring unit with a flooring category name LVP (luxury Vinyl Plank {rectangular like a hardwood flooring unit shape}), LVT (Luxury Vinyl Tile {square like a stone or ceramic tile flooring unit}), Laminate, or more broadly resilient flooring (which is resilient to wear and tear and made from unnatural synthetic (with some organic) raw materials.

The following is a basic embodiment for a Luxury Vinyl Plank:
The First layer is a "UV" layer that resists Ultraviolet Light from the Sun and can be adapted to include chemicals to resist discoloration, bacteria and solvents. Particles of silver, aluminum oxide, ceramics etc. can all be incorporated into the blend. This chemical formula is then extruded or calendared into a sheet good for further processing.

The Second Layer is a Protective Wear Layer that prevents wear and is tear resistant. Typically, the wear layer is made of translucent vinyl and is 0.2mm to 0.55mm in thickness. The raw materials are blended and either extruded or calendared into a sheet good for further processing.

The Third Layer is a Print Layer made from Virgin (not recycled) PVC that can be printed with a realistic mimic of a natural wood pattern, or stone pattern or the like. This layer is typically embossed with an engraved roller and current technologies allow this layer to be in HD (high definition).

The Fourth and Fifth layers are typically made from PVC or Virgin PVC in varying thicknesses depending upon the flooring unit being a cheaper product (thinner) or more expensive product (thicker).

Other embodiments include a fiberglass sheet good layer for stability and to help "bond" the layers, and layers with properties that cushion (like cork or synthetic cushioning materials) for a softer feel when walked upon. Sometimes a cushioning layer is added to resist small indentations or particles of varying size that were not removed that exist between the substrate and the flooring unit. These particles or indentations can destabilize and crack the flooring units over time or a nail (as an example) that was inadvertently left and covered over between the substrate and the flooring unit will eventually push and show a reveal or telegraph (an industry term) from above which is aesthetically unappealing.

Typically, all of these layers or rolled goods are then cut to specific sized pattern and then are assembled into a "jig" in the correct order, and then onto a holding rack that houses multiple finished jigs that hold all the layers in place for further processing.

The assembled jigs that are placed in the holding racks are then put into an industrial hot-press. This hot-press is set to a certain temperature which may be 160 to 180C and a certain PSI pressing that could be 18000 to 20000 PSI for an amount of time that may be 10 minutes. A cool down period that may be 5 minutes while in the hot-press is also needed to help bond all the layers into one unit that is permanently bonded.

This hot-press method does away with the need to adhere the layers together using adhesives. Another manufacturing method is to utilized adhesive in between the layers in a cold press method whereas the layers are subjected to pressure but no heating or minimal heating. The prevailing method is to hot-press.

These advances from HDF to PVC based layers have mostly solved the problem that occurs with moisture and humidity that can be subjected to the aforementioned flooring units making them more dimensionally stable when these elements are subjected to them.

The embodiment above is what the industry calls a dry back flooring unit. These means that the product is meant to be installed directly to the substrate utilizing an adhesive bond.

A further Innovation is to utilize a "floating system" (not permanently bonded to the substrate). This invention was invented in 1996 by the Swedish company Välinge Aluminium (now Välinge Innovation) and sold under the names of Alloc and Fiboloc and described in Publication number DE19925248 A1, Application number DE1999125248, Publication date Dec. 21, 2000, Filing date Jun 1, 1999, also published as DE19925248C2.

Further, another system for holding flooring panels together was also developed by the Belgian company Unilin Beheer B.V. sold under the name of Quick-Step flooring or Unilin Click. Unilin Beheer B.V. is now a subsidiary of Mohawk Industries and described in Publication number US8234829 B2, Application number US 13/339,987, Publication date Aug 7, 2012, Filing date Dec 29, 2011, also published as US8196366, US8356452, US8484920, US20030033777, US20120096792, US20120260486, US20120266556, WO2003016655A1.

Almost all "locking" systems in the flooring industry as it pertains to floating floor methods utilize these two inventions under license.

Typically, with Natural Hardwoods and Engineered Hardwood flooring or wall coverings, Moisture and Humidity effect the products greatly and cause them to bow, swell, cup, and crown causing various problems. These products are not dimensionally stable under these conditions. Conversely, Temperature does not affect these products greatly. With LVT and LVP utilizing PVC type layers the opposite is true. While Natural Hardwoods and Engineered Hardwoods are effected by Moisture and Humidity, LVT and LVP are typically unchanged to these elements. LVT and LVP however are affected by temperature whereas Natural Wood flooring units are not.

As an example, an installation of an LVP product that is in direct sunlight through a window, the flooring unit can be heated up to over 150F. This heating of the Flooring unit causes the LVP/LVT to expand greatly causing various product failures.

Conversely, below zero temperatures can make the flooring unit contract causing significant gaps. In essence when exposed to temperature changes, LVT/LVP is not dimensionally stable and can cause catastrophic failure of the products and installation of the products.

To help solve this dimensionally stability problem in resilient products new innovations were required. Piet Dossche of USfloors (now owned by the Shaw Corporation) invented an innovation under the brand name CoreTec described in at least Application Number: 14/816181, Inventors: Dossche, Piet V. (Rocky Face, GA, US), Erramuzpe, Philippe (Augusta, GA, US), Grant: 9,234,957, and Further in a Continuation-in-Part: 08/03/2015, US Patent # 9,193,137 B2, Inventors: Piet Dossche, Assignment: US Floors, Priority Date: October, 2012, Grant: November 15, 2015.

This Innovation utilizes a dimensionally stable "Core" product that consists of bamboo dust, cork dust, wood dust, (the continuation comprises other "like" materials) and High Density Polyethylene (HDPE) of Polyvinyl Chloride (PVC). Optionally and attached Cork cushioning layer comprises the bottom most layer. Further waterproof type adhesives are utilized in the pressing process to adhere all the layers together.

This Core claims to swell from moisture to no more than 0.01%.

This innovation seems to solve the dimensional stability problem but still faces limitations. Claimed in this prior art is a "click lock" type fastening system that allows the flooring unit to be "floated" i.e. No adhesive used to bond the flooring unit to the substrate.

As stated earlier, this prior art can be installed "floating". The company recommends with heavy furniture on top of the flooring units, that the flooring unit be completely glued down to the substrate. The reasoning is that the heavy furniture/equipment/chairs cause movement and potential gaps and buckling of the floors due to the shifting weight above the flooring unit. Since the flooring unit is floating, it is not bonded in anyway causing these type failures.

Since there is also a locking system that also has voids in its structure, the potential to break apart, damage during installation, or damage removing a single board is possible and does cause product failure. As with all locking systems, you cannot simply remove a flooring unit from the middle of an installation. You also must lay the flooring units adjacent to each other not allowing for patterns that are desired. If a certain pattern is desired, the locking system must be manually removed in the field by the flooring mechanic greatly increasing installation cost and will lead to failure now that the locking system that holds one flooring unit to another has been removed.

As stated previously, since there is also a void space in the locking system itself, this can lead to squeaks and noisy floors something that is highly undesirable and can cause defect claims.

The extruded core in the CoreTec Product, is typically made from dust, wood dust, plastic, calcium carbonite filler, limestone and various "other" dusts all held together with a plasticizer. This core is very thick and expensive. Typically, the core's specific gravity is 1.8 which is hard as to make the entire flooring unit more rigid and less susceptible to dimensional stability problems.

The "Core" embodiment of Piet Dossche invention (per website spec sheet) is 5.0mm in thickness comprising limestone, virgin PVC, wood and bamboo dust. Although dimensionally stable, most LVT/LVP products in the market place are between 2.0mm and 5.00mm in overall thickness whereas the WPC invention is a minimum of 8.0mm which is some cases is 4x the use of raw materials to achieve the goal of dimensional stability, greatly increasing the overall price of this type of flooring unit.

What is needed is the Interchangeable Box System to drastically reduce raw materials, interchangeability, and the associate problems of conventional manufacture and installation methods. Embodiments for brand new flooring categories utilizing the interchangeable Box System are now possible for the first time.

What is needed is a "hybrid" flooring unit that is impervious to moisture and temperature.

Utilizing the Interchangeable Box System, The Underlayment in the Interchangeable Box System is a waterproof membrane between the substrate and the Flooring Unit. The Underlayment prevents moisture from permeating from the subfloor.

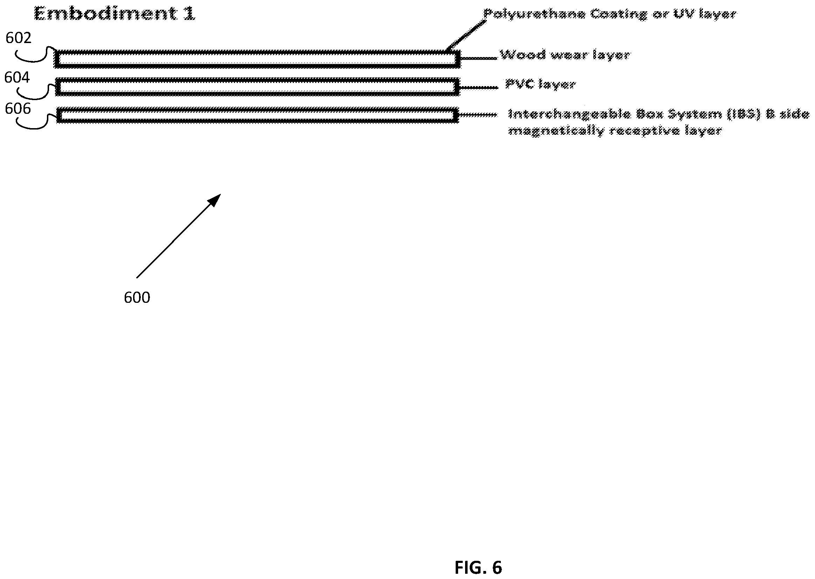

In an embodiment, shown in FIG. 6, for the unit 600 a polyurethane coating or UV Layer encapsulates (for moisture and UV sunlight) the second "wood veneer wear layer" 602 (similar to the veneer of engineered hardwood). The third layer is a PVC 604 or Virgin PVC or similar plastic type compound of varying thickness depending upon customer preference for the "feel" of a superior (in the case of a thicker layer) or more affordable (thinner layer) flooring unit. The final layer would be the "IBS" layer 606 (Interchangeable Box System "B" side) of a thickness desired (could be 0.3mm) to be receptive to the IBS Underlayment "A" side, a waterproof moisture membrane (a secondary moisture membrane as the underlayment in the IBS system is already a waterproof membrane) and is dimensionally stable while giving the overall "hybrid" flooring unit is rigidity and dimensional stability. The "B" side receptive layer 606 has a specific gravity of approximately 4.8 which is more than double the "hardness" or specific gravity of the WPC core in the prior art and enhances rigidity and superior to the WPC core. By utilizing a thin wood "veneer" layer, and encapsulation of this layer from above with a polyurethane/UV coating above this layer, the overall flooring unit will be watertight. Even in the unlikely scenario of a failure of the encapsulation, the thin organic wood veneer layer and the IBS system itself would ensure that the flooring unit would remain in place as there is not enough "material" to dimensionally grow or shrink and the IBS magnetic force would be stronger than the force of moisture.

This embodiment is superior to the prior art since it solves the problem of dimensionally stability in wood type flooring units and resilient type flooring units and reduces raw materials significantly. The IBS layer starting at 0.3mm and thicker is achieves the same desired benefits as the prior art WPC core's 5.0mm thickness significantly reducing cost and the need for excess raw materials. In this embodiment, due to the IBS system itself, there is no need for a locking system and the system itself as taught is the bond. This will allow the end user to have a dimensionally stable product with the natural look and feel of "real wood" which is highly desirable, impervious to moisture and temperature and will allow complex patterns to be achieved without strenuous labor which is the norm with the prior arts drawback of a locking system.

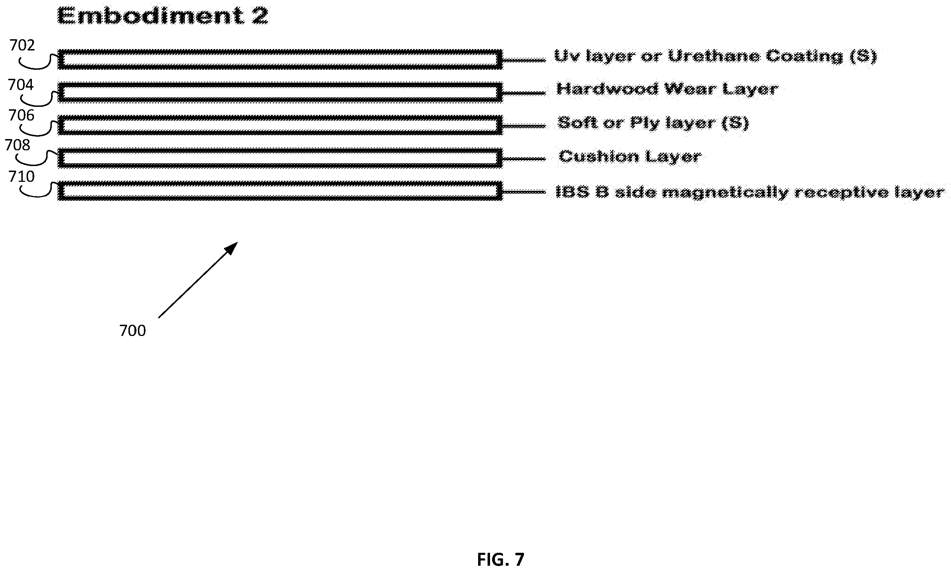

In another embodiment, shown in FIG. 7, the unit 700 comprises a polyurethane coating or UV Layer 702 which encapsulates (for moisture and UV sunlight) the second "wood veneer wear layer" 704 (similar to the veneer of engineered hardwood). The third layer 704 is a PVC or Virgin PVC or similar plastic type compound of varying thickness depending upon customer preference for the "feel" of a superior (in the case of a thicker layer) or more affordable (thinner layer) flooring unit. The 4^{th} layer or cushion layer 708 would be made from any "cushioning material desired" that would have acoustic properties (to aid in sound absorption), cushioning properties for end user preference and would aid in subfloor imperfections telegraphing through the flooring unit. This layer 708 would also be made with materials that are impervious to moisture such as cork, cork dust with resin, and other polymer/foam etc. based raw materials. The final layer 710, or 5^{th} layer in this embodiment, would be the "IBS" layer (Interchangeable Box System "B" side) of a thickness desired (could be 0.3mm) to be receptive to the IBS Underlayment "A" side, a waterproof moisture membrane (a secondary moisture membrane as the underlayment in the IBS system is already a waterproof membrane) and is dimensionally stable while giving the overall "hybrid" flooring unit is rigidity and dimensional stability. For the same reasons as described in FIG. 6 above, this embodiment would be superior to the aforementioned prior art.

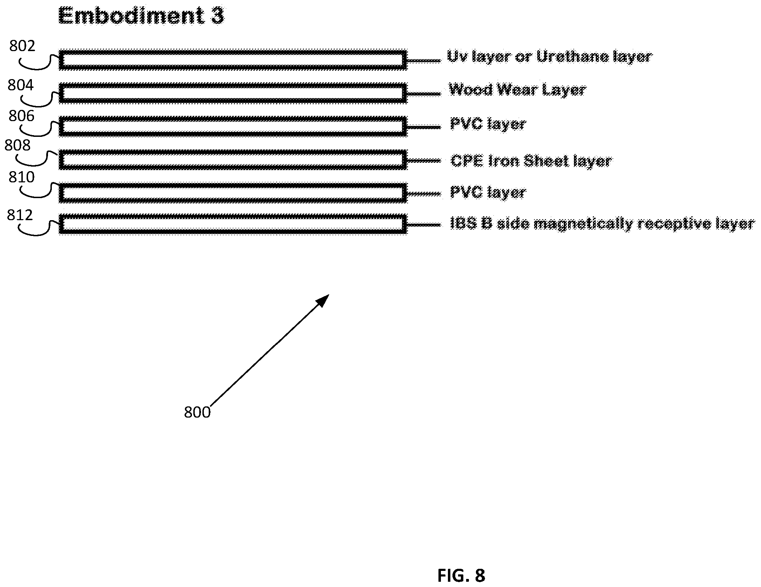

In yet another embodiment, shown in FIG. 8, the unit 800 comprises a polyurethane coating or UV Layer 802 which encapsulates (for moisture and UV sunlight) the second "wood veneer wear layer" 804 (similar to the veneer of engineered hardwood). The third layer 806 is a PVC or Virgin PVC or similar plastic type compound of varying thickness depending upon customer preference for the "feel" of a superior (in the case of a thicker layer) or more affordable (thinner layer) flooring unit. The 4^{th} layer 808 would be a thin, approximately 0.3mm, chlorinated polyethylene (CPE) and an iron compound sheet that has a specific gravity approximately 4.8 would be the center layer in the overall flooring layer. This layer 808 is to add rigidity dispersed throughout the overall flooring unit if needed. The 5^{th} layer 810 would be another PVC (virgin or non-virgin) layer to sandwich the CPE Iron Sheet layer. In this embodiment layer 3 and 5, would equally disperse the "plastic component" of the overall flooring unit. Lastly the 6^{th} layer 812 in this embodiment, would be the "IBS" layer (Interchangeable Box System "B" side) of a thickness desired (could be 0.3mm) to be receptive to the IBS Underlayment "A" side, a waterproof moisture membrane (a secondary moisture membrane as the underlayment in the IBS system is already a waterproof membrane) and is dimensionally stable while giving the overall "hybrid" flooring unit is rigidity and dimensional stability. For the same reasons as described in FIG. 6 above, this embodiment would be superior to the aforementioned prior art.

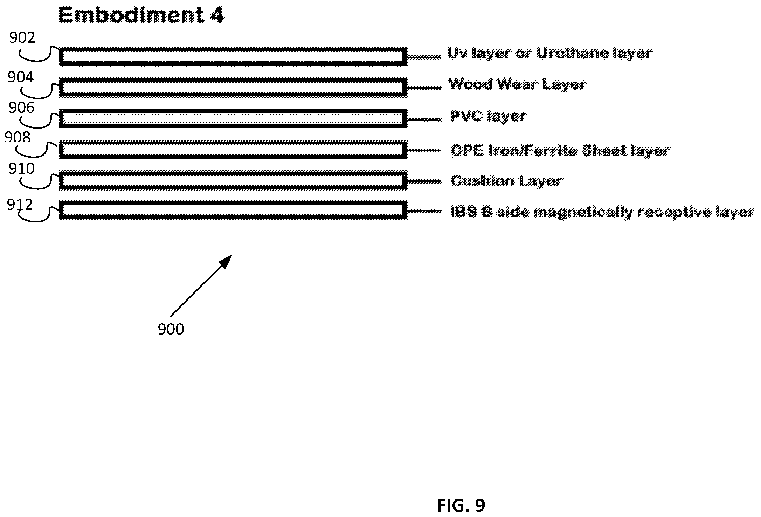

In yet another embodiment, shown in FIG. 9, the unit 900 comprises a polyurethane coating or UV Layer 902 encapsulates (for moisture and UV sunlight) the second "wood veneer wear layer" 904 (similar to the veneer of engineered hardwood). The third layer 906 is a PVC or Virgin PVC or similar plastic type compound of varying thickness depending upon customer preference for the "feel" of a superior (in the case of a thicker layer) or more affordable (thinner layer) flooring unit. The 4th layer 908 is a thin, approximately 0.3mm, chlorinated polyethylene (CPE) and an iron compound sheet that has a specific gravity approximately of 4.8 would be approximately the center layer in the overall flooring layer. The 5^{th} layer 910, or cushion layer would be made out of any "cushioning material desired" that would have acoustic properties (to aid in sound absorption), cushioning properties for end user preference and would aid in subfloor imperfections telegraphing through the flooring unit. Lastly the 6th layer 912 in this embodiment 900, would be the "IBS" layer (Interchangeable Box System "B" side) of a thickness desired (could be 0.3mm) to be receptive to the IBS Underlayment "A" side, a waterproof moisture membrane (a secondary moisture membrane as the underlayment in the IBS system is already a waterproof membrane) and is dimensionally stable while giving the overall "hybrid" flooring unit is rigidity and dimensional stability. For the same reasons as described in FIG. 6 above, this embodiment would be superior to the aforementioned prior art.

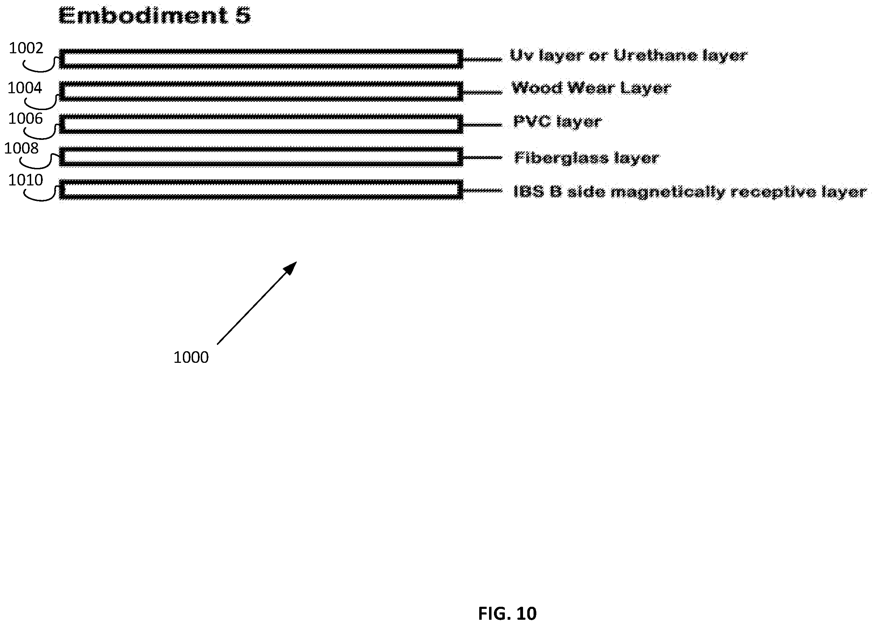

In yet a further embodiment, shown in FIG. 10, the unit 1000 comprises a polyurethane coating or UV Layer 1002 which encapsulates (for moisture and UV sunlight) the second "wood veneer wear layer" 1004 (similar to the veneer of engineered hardwood). The third layer 1006 is a PVC or Virgin PVC or similar plastic type compound of varying thickness depending upon customer preference for the "feel" of a superior (in the case of a thicker layer) or more affordable (thinner layer) flooring unit. The 4th layer 1008 would be a thin fiberglass sheet layer that will aid in "pressing of all layers" and will provide thermal and sound absorbing properties. Lastly the 5th layer 1010 in this embodiment, would be the "IBS" layer (Interchangeable Box System "B" side) of a thickness desired (could be 0.3mm) to be receptive to the IBS Underlayment "A" side, a waterproof moisture membrane (a secondary moisture membrane as the underlayment in the IBS system is already a waterproof membrane) and is dimensionally stable while giving the overall "hybrid" flooring unit is rigidity and dimensional stability. For the same reasons as described in FIG. 6 above, this embodiment would be superior to the aforementioned prior art.

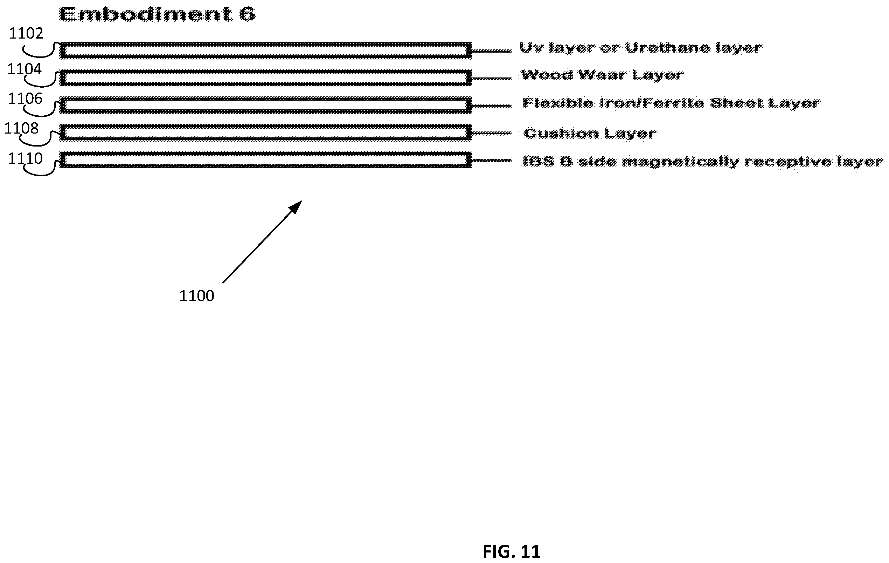

In yet another embodiment, shown in FIG. 11, the unit 1100 comprises a polyurethane coating or UV Layer 1102 which encapsulates (for moisture and UV sunlight) the second "wood veneer wear layer" 1104 (similar to the veneer of engineered hardwood). The 3rd layer 1106 is a thin, approximately 0.3mm, chlorinated polyethylene (CPE) and an iron compound sheet that has a specific gravity approximately of 4.8 would be approximately the "near center" layer in the overall flooring layer. The 4th layer 1108, or cushion layer would be made from any "cushioning material desired" that would have acoustic properties (to aid in sound absorption), cushioning properties for end user preference and would aid in subfloor imperfections telegraphing through the flooring unit. Lastly the 5th layer 1110 in this embodiment, would be the "IBS" layer (Interchangeable Box System "B" side) of a thickness desired (could be 0.3mm) to be receptive to the IBS Underlayment "A" side, a waterproof moisture membrane (a secondary moisture membrane as the underlayment in the IBS system is already a waterproof membrane) and is dimensionally stable while giving the overall "hybrid" flooring unit is rigidity and dimensional stability. For the same reasons as described in FIG. 6 above, this embodiment would be superior to the aforementioned prior art.

The "wood wear layer" in all the embodiments, can also be substituted for any other "veneer type layer", including but not limited to natural stone, porcelain, traditional PVC embossed layers, wood, decorate or other veneer layers from other raw materials of varying thicknesses, and that these embodiments including for all inventions noted can be utilized on any surface of the IBS system (floors, walls and ceilings) in any configuration desired.

### System Component Receptive Material or "SCRM"

System Component Receptive Material or "SCRM" refers to a material and/or composition for use manufacturing magnetically receptive layer products "MRLP" and may include, for example, a powder-based component or a sheet product, which may also be referred to as "Bulk Iron Material." In one implementation, the SCRM in powder form may be directly pressed or otherwise applied to receptive layer components to arrive at a MLRP. In an alternative implementation, the SCRM may be used to make an intermediate sheet good for combining with finished surface cover components to arrive at MLRP products, in essence converting a non-magnetically receptive layer product into an MLRP.

In one manner of implementing aspects of the present invention, modular surface covering units comprise a surface covering portion that may be, for example, a decorative floor or wall tile, a decorative wood plank, a decorative vinyl plank, or a carpet square. Other floor covering unit material types, shapes, and compositions may be used. The surface covering unit may a floor, wall or ceiling covering unit or may also be, for example, a trim or decorative piece other than a covering unit. In this manner, the floor or other covering unit may be used in a "interchangeable box system" wherein all covering units and decorative elements in the system may be easily installed, removed, moved, or rearranged on a magnetic underlayment disposed on a supporting surface (i.e., wall, floor, ceiling). Each modular surface covering unit also comprises a magnetically receptive layer. This magnetically receptive layer may be referred to as a "SCRM" layer or a "receptive 'B' side layer." The SCRM layer (receptive "B" side layer) in the interchangeable box system takes on many different forms and processes depending upon the building material and the material composition of said building material.

The SCRM receptive layer of a covering unit, such as a modular floor covering unit, in the interchangeable box system may be adhered to organic compound materials such as natural wood, natural stone or ceramic stone. The SCRM receptive layer may also be used with synthetic building materials such as luxury vinyl tiles "LVT", luxury vinyl plank "LVP", rubber compound products like sports surfaces and other similar surface coverings. Since the SCRM layer is used with different surface covering material compositions, it must comprise certain qualities for all applications. However, different materials and processes must be used to manufacture the SCRM layer when it is to be used with surface covering materials having "like" properties.

The interchangeable box system - magnetic underlayment, magnetically receptive layer, and surface covering unit (e.g., modular floor covering unit) - comprises unique properties and qualities that can be utilized to work with existing building materials. Additionally, other qualities are desired in the system to be compatible with a wider range of materials and in a wider range of applications. These additional qualities include, but are not limited to oxidation resistance, dimensional stability (i.e., will not grow or contract when exposed to outside/inside elements, for example changes in temperature or humidity), resistance to harsh chemicals and solvents (e.g., cleaning products), oils, heat, flammability, abrasion, rolling loads, heavy loads, vibration, foot traffic and the like. The elements of the interchangeable box system must also be receptive to the "A" side magnetic underlayment disposed on the supporting surface which must also comprise equal or similar properties.

In most SCRM applications, wherein the SCRM layer is joined to either natural, non-natural, or synthetic building materials, production of the SCRM layer comprises blending ferrous compounds with a desired polymer (e.g., Chlorinated Polyethylene "CPE") to provide the SCRM layer with the desired properties described hereinabove. Additionally, a conditioning agent such as Epoxidized Soybean Oil "EPO" is used to achieve the desired flexibility and adherence during manufacture.

A ferrite is a type of ceramic compound composed of iron(III) oxide (Fe2O3) combined chemically with one or more additional metallic elements (e.g., iron oxide and strontium carbonate stainless iron powder, iron oxide 304 and other metallic compounds). Ferrite compounds are electrically nonconductive and ferrimagnetic, meaning they can be magnetized or attracted to a magnet. Ferrites can be divided into two families based on their magnetic coercivity and their resistance to being demagnetized. Hard ferrites have high coercivity and are difficult to demagnetize. They are used to make magnets, for example in devices such as refrigerator magnets, loudspeakers and small electric motors. Hard ferrites may be used in the production of the "A" side interchangeable box system magnetic underlayment. However, other compounds may be used in some applications for the magnetic underlayment where other properties are desired. Soft ferrites have low coercivity.

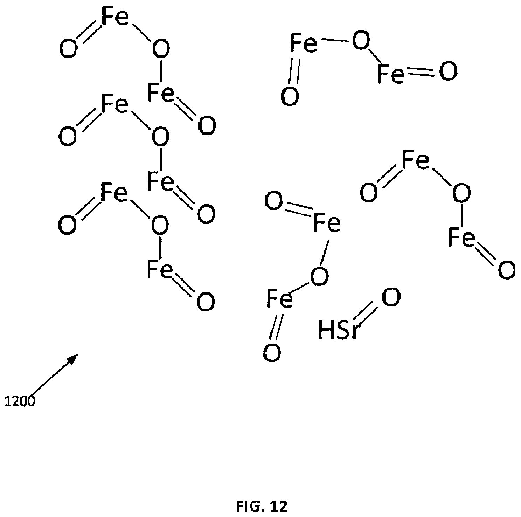

One embodiment of the interchangeable box system of the present disclosure uses a strontium ferrite compound having a hexagonal crystal structure at a 1.9-2.3 micron size for the "B" side receptive layer and the "A" side magnetic underlayment. However, the "A" side magnetic underlayment micron size may use an increased individual particle surface area to increase potential magnetization. FIG. 12 provides an exemplary strontium ferrite compound 1200 having the chemical structure SrFe12O19 SrO·6Fe2O3.

Ferrites are produced by heating a mixture of finely-powdered precursors pressed into a mold. During the heating process, calcination of carbonates occurs in the following chemical reaction:

MCO3 → MO + CO2

The oxides of barium and strontium are typically supplied as their carbonates, BaCO3 or SrCO3. The resulting mixture of oxides undergoes sintering. Sintering is a high temperature process similar to the firing of ceramic ware.

Afterwards, the cooled product is milled to particles smaller than 2 µm, small enough that each particle consists of a single magnetic domain. Next the powder is pressed into a shape, dried, and re-sintered. The shaping may be performed in an external magnetic field, in order to achieve a preferred orientation of the particles (anisotropy). This may be used to produce an anisotropic sheet good.

Small and geometrically easy shapes may be produced with dry pressing. However, in such a process small particles may agglomerate and lead to poorer magnetic properties compared to a wet pressing process. Direct calcination and sintering without remilling is possible as well but leads to poor magnetic properties.

To allow efficient stacking of product in a furnace during sintering and to prevent parts sticking together, product may be separated using ceramic powder separator sheets. These sheets are available in various materials such as alumina, zirconia and magnesia. They are also available in fine, medium and coarse particle sizes. By matching the material and particle size to the product being sintered, surface damage and contamination can be reduced while maximizing furnace loading.

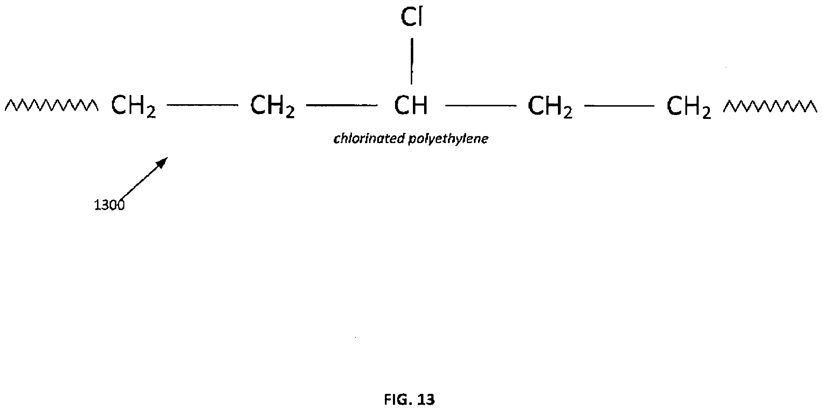

Chlorinated polyethylene elastomers ("CPE") and resins have excellent physical and mechanical properties, such as resistance to oils, temperature, chemicals, and weather. An exemplary CPE 1300 is provided in FIG. 13 and may be used to provide a waterproof membrane or waterproofing characteristics to a sheet good produced for the interchangeable box system (e.g., the receptive "B" layer or the magnetic underlayment "A" layer). CPEs may also exhibit the characteristics of superior compression set resistance, flame retardancy, tensile strength and abrasion resistance and may provide these characteristics to the magnetic underlayment or magnetically receptive layer.

CPE polymers comprise may materials from rigid thermoplastics to flexible elastomers, making them highly versatile. CPE polymers are used in a variety of end-use applications such as wire and cable jacketing, roofing, automotive and industrial hose and tubing, molding and extrusion, and as a base polymer. In a preferred embodiment, a CPE polymer is the desired polymer in the magnetically receptive "B" and magnetic underlayment "A" side layers of the interchangeable box system of the present invention.

CPE polymers blend well with many types of plastics such as Polyethylene, EVA, and PVC which many building materials, such as Luxury Vinyl Plank and Tile Flooring Products, are comprised of. Such blends of CPE polymers and other plastics can be formed into final products with adequate dimensional stability without the need of vulcanization. The excellent additive/filler acceptability characteristics of CPE polymers can provide a benefit in blends where compound performance and economics are critical such as in the production of the magnetically receptive "B" and magnetic underlayment "A" side layers of the interchangeable box system of the present invention.

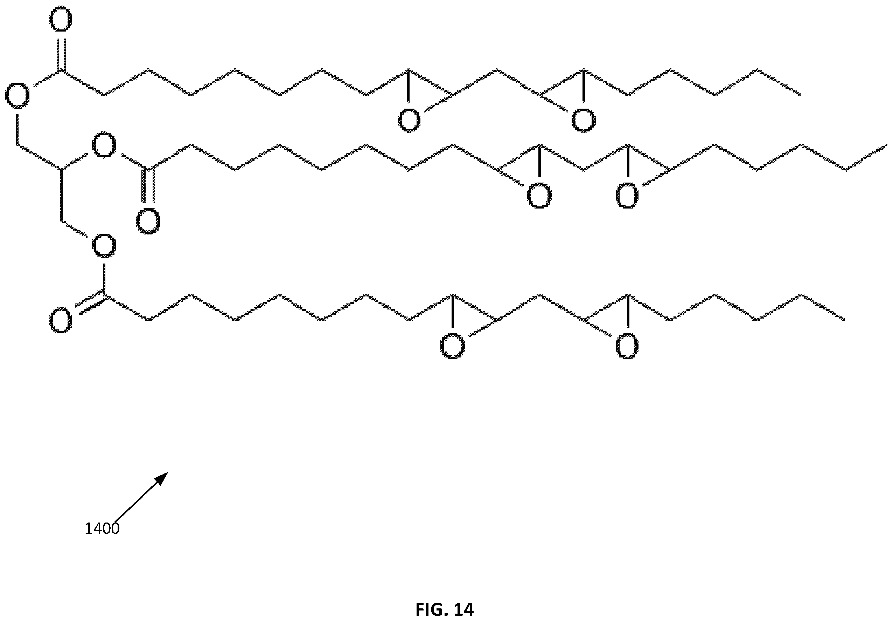

Epoxidized soybean oil (ESBO), of which an exemplary ESBO molecule 1400 is provided in FIG. 14, is a collection of organic compounds obtained from the epoxidation of soybean oil. It is used as a plasticizer and stabilizer in polyvinyl chloride (PVC) plastics. ESBO is a yellowish viscous liquid. ESBO is manufactured from soybean oil through the process of epoxidation. Polyunsaturated vegetable oils are widely used as precursors to epoxidized oil products because they have high numbers of carbon-carbon double bonds available for epoxidation. The epoxide group is more reactive than double bond and thus providing a more energetically favorable site for reaction and making the oil a good hydrochloric acid scavenger and plasticizer. Usually a peroxide or a peraclid is used to add an atom of oxygen and convert the -C=C- bond to an epoxide group.

Food products that are stored in glass jars are usually sealed with gaskets made from PVC. ESBO is typically one of the additives in the PVC gasket in that type of application. It serves as a plasticizer and as a scavenger for hydrochloric acid released when the PVC degrades thermally, e.g. when the food product undergoes sterilization.

Strontium ferrite, CPE polymers, and ESBO are used in making the magnetic underlayment "A" and magnetically receptive "B" side layers for the interchangeable box system of the present invention. The three compounds, strontium ferrite, CPE polymer, and ESBO, are used in various formula compositions and also provide unique properties that conventional methods of adherence of building materials simply do not have. Utilization of these compounds insure that no volatile organic compounds "VOCs" are brought into building structures - a common problem of conventional adherence systems (e.g., glue down applications).

The interchangeable box system of the present invention may use one of the following formulas for the composition of the magnetic underlayment "A" and magnetically receptive "B" side layers. The specific formula chosen depends on the supporting surface, surface covering unit, environmental conditions, and use case for the interchangeable box system by the end user.

Magnetic or magnetically receptive sheet good material composition formulas include the following:
Pure iron powder (Fe) approximately 84%, CPE approximately 15% and soybean oil (ESBO) approximately 8%;
Iron powder (Fe3O4) 90%, CPE 9% and plasticizer 1% (C19H36O3 epoxy ester);
Mn-Zn (manganese/zinc) soft ferrite powder 90%, CPE 9% and plasticizer 1%;
20 portions of CPE, 150 portions of stainless iron powder; and
30 portions of PVC, 18 portions of DOTP, 200 portions of stainless iron powder. (Dioctyl terephthalate, commonly abbreviated DOTP or DEHT, is an organic compound with the formula C6H4 2. It is a non-phthalate plasticizer, being the diester of terephthalic acid and the branched-chain 2-ethylhexanol. This colorless viscous liquid used for softening PVC plastics).

These formulas are mixed and formed into a sheet good that is either "hot pressed" into or onto an existing building material, such as one comprised of synthetic materials. Natural materials (e.g., natural wood or natural stone) are "cold pressed" into natural materials as to not damage the natural material. The formulas provided above do not comprise the most receptive sheet good for a magnetization process. The formulas above each comprise a tradeoff to have the required strength to hold a building material in a fixed position on a plane (e.g., supporting surface such as a wall or floor), and have the desired qualities stated above.

Depending upon the nature of the existing building material onto which the magnetically receptive "B" layer or the magnetized underlayment "A" layer is to be disposed different compositions may be used and are not necessarily limited to one of the formulas provided above. However, the above formulas are the preferred formula for most building material compositions and installation applications. In addition, depending upon the material composition for the surface covering unit onto which the finished sheet good (e.g., magnetic underlayment or magnetically receptive layer) is to be applied, the formula for the sheet good may be changed. For example, the formula may comprise mixing different powders, plasticizers, and other materials for the composition of the sheet good used in the magnetic underlayment or magnetically receptive layer. Compounds that are not as receptively strong, but that have already been oxidized, such as ferrous oxide or stainless iron powder, are used so that the sheet good is highly resistant to rust.

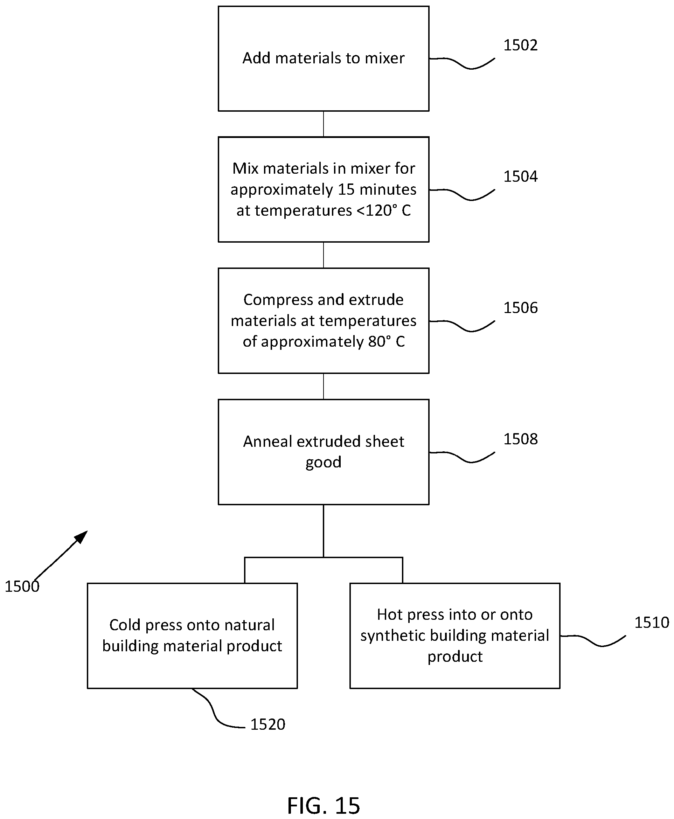

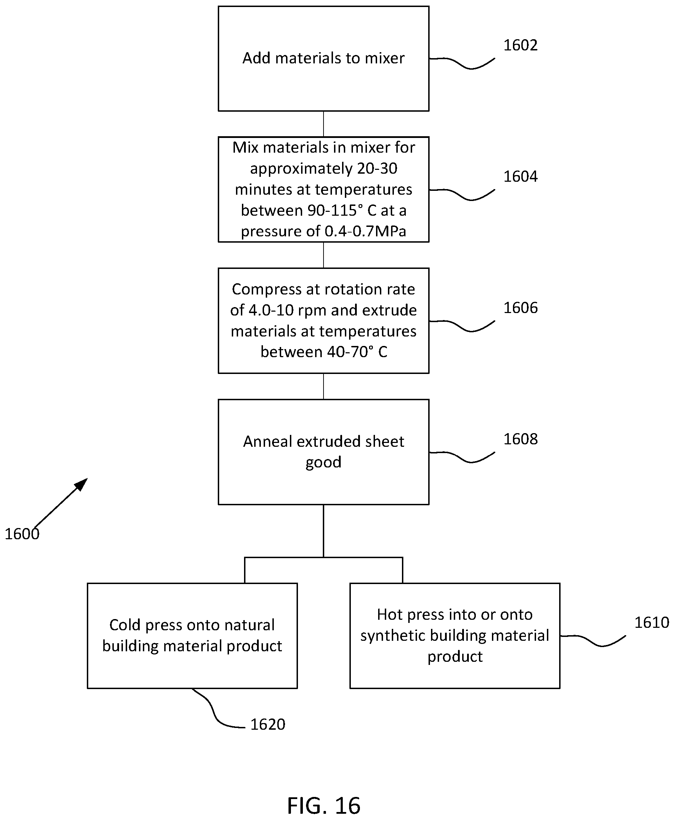

Exemplary processes for producing the sheet good for the magnetically receptive "B" layer or the magnetic underlayment "A" are provided in FIGs. 15 and 16. With reference first to FIG. 15, a process 1500 for producing the sheet good at atmospheric pressure is provided. First, the components for producing the sheet good, such as strontium ferrite, CPE polymer, ESBO, according to the desired formula are placed in a mixer in step 1502. Then in step 1504, the materials are mixed and blended in a mixer, such as a banbury mixer, for approximately around 15 minutes at a maximum temperature is 120° C. The mixed materials are then compressed and extruded in step 1506 as a sheet at a rate of approximately 10m per minute at a temperature of approximately 80° C. In all steps of the process 1500, the mixture is exposed to the air at atmospheric pressure and not in a vacuum or partial vacuum. An additional annealing process 1508 may be performed after the mixture has been extruded as a sheet good. CPE polymers have properties that are better for dimensional stability than other possible materials but may still have dimensional stability issues. For formulas incorporating CPE polymers the step 1508 of annealing will be used, but is not required in all sheet good formulas.

This vulcanizing/annealing step 1508 is performed before the sheet good is applied to a building material to be used as the surface covering unit. A test of the sheet good may be performed at the lab level to determine the dimensional stability of the sheet good. For the sheet good to be used in securing a surface covering unit a desired level of dimensional stability is required. If the sheet good used as a magnetic underlayment "A" layer or magnetically receptive "B" layer is not dimensionally stable the surface covering unit may not stay installed as desired and the system may fail. For example, in the case of a flooring material, the flooring may have a catastrophic failure due to expansion and contraction and "warp" the building material causing or "peaks" or "gaps" which are not desirable and would lead and imperfect installation.

Annealing is a heat treatment that alters the physical and sometimes chemical properties of a material to increase its ductility and reduce its hardness. In annealing, atoms migrate in the crystal lattice and the number of dislocations decreases, leading to the change in ductility and hardness. This process makes it more workable. Annealing is used to bring a metal closer to its equilibrium state. In its heated, soft state, the uniform microstructure of a metal will allow for excellent ductility and workability. In order to perform a full anneal in ferrous metals the material must be heated above its upper critical temperature long enough to fully transform the microstructure to austenite. The metal must then be slow-cooled, usually by allowing it to cool in the furnace, so as to allow maximum ferrite and pearlite phase transformation.

Table 1 and Table 2, provided below illustrate the dimensional change, in the length direction in Table 1 and in the width direction in Table 2, of a sheet good after a 71 hour annealing process.

**Table 1**

| | Length Direction | | | |
|---|---|---|---|---|
| | Length (mm) | L. after (mm) | L. Change (mm) | L. Change % |
| Receptive Layer, 55°C, 71 hrs. | 229.16 | 229.04 | -0.12 | -0.05 |
| | 209.71 | 209.51 | -0.20 | -0.10 |
| | 189.44 | 189.22 | -0.22 | -0.12 |
| | 129.47 | 129.35 | -0.12 | -0.09 |
| | 130.04 | 130.03 | -0.01 | -0.01 |
| | 128.29 | 128.29 | 0.00 | 0.00 |
| | 238.97 | 238.95 | -0.02 | -0.01 |
| | 238.84 | 238.60 | -0.24 | -0.10 |
| | 238.84 | 238.75 | -0.09 | -0.04 |
| | 3400.00 | 3400.00 | 0.00 | 0.00 |
| | 2158.00 | 2156.00 | -2.00 | -0.09 |
| Magnetic Underlayment, 55°C, 71 hrs. | 261.46 | 261.40 | -0.06 | -0.02 |
| | 260.85 | 260.67 | -0.18 | -0.07 |
| | 234.63 | 234.51 | -0.12 | -0.05 |
| | 240.37 | 240.34 | -0.03 | -0.01 |
| | 231.07 | 230.95 | -0.12 | -0.05 |
| | 2372.80 | 2370.00 | -2.80 | -0.12 |
| | 2366.00 | 2366.00 | 0.00 | 0.00 |

**Table 2**

| | Width Direction | | | |
|---|---|---|---|---|
| | Width (mm) | W. after (mm) | W. Change (mm) | W. Change % |
| Receptive Layer, 55°C, 71 hrs. | 215.33 | 215.23 | -0.10 | -0.05 |
| | 239.95 | 239.88 | -0.07 | -0.03 |
| | / | / | / | / |
| | 110.99 | 110.95 | -0.04 | -0.04 |
| | 111.45 | 111.45 | 0.00 | 0.00 |
| | 113.13 | 113.11 | -0.02 | -0.02 |
| | 238.93 | 238.73 | -0.20 | -0.08 |
| | 239.59 | 239.52 | -0.07 | -0.0.3 |
| | 239.70 | 239.62 | -0.08 | -0.03 |
| | 915.10 | 915.00 | -0.10 | -0.01 |
| | 913.10 | 912.60 | -0.50 | -0.05 |
| Magnetic Underlayment, 55°C, 71 hrs. | 259.49 | 259.40 | -0.09 | -0.03 |
| | 259.10 | 259.09 | -0.01 | 0.00 |
| | 239.77 | 239.71 | -0.06 | -0.03 |
| | 204.79 | 204.68 | -0.11 | -0.05 |
| | 259.88 | 259.82 | -0.06 | -0.02 |
| | 791.90 | 790.70 | -1.20 | -0.15 |
| | 792.00 | 791.10 | -0.90 | -0.11 |

After the annealing step 1508, or if the annealing step 1508 is not required due to the formula composition used for the sheet good, the sheet good is then be hot pressed onto a synthetic building material product in step 1510 or cold pressed into a natural building material product in step 1520 to form a finished surface covering unit. If the sheet good is not to be used on a surface covering unit and is to be used as a magnetic underlayment, a magnetization step may be performed on the sheet good to form a magnetic underlayment "A" layer.

With reference now to FIG. 16, a process 1600 for producing a sheet good at non-atmospheric pressure is provided. First, the components for producing the sheet good, such as strontium ferrite, CPE polymer, ESBO, according to the desired formula are placed in a mixer in step 1602. Then in step 1604, the materials are mixed and blended in a mixer, such as a banbury mixer, for 20-30 minutes at a temperature of 90-115°C and at a pressure of 0.4-0.7MPa. In step 1606 the sheet good is extruded at a compression rate into sheet form at a rotation rate of 4.0-10 meters per minute and at a temperature of 40-70°C. The mixture is compressed into a sheet good in step 1606 by mutually compacting two rollers into a specified thickness which is typically 0.3mm in thickness for a magnetically receptive "B" layer. An additional annealing process 1608 may be performed after the mixture has been extruded as a sheet good. For formulas incorporating CPE polymers the step 1608 of annealing will be used, but is not required in all sheet good formulas. After the annealing step 1608, or if the annealing step 1608 is not required due to the formula composition used for the sheet good, the sheet good is then be hot pressed onto a synthetic building material product in step 1610 or cold pressed into a natural building material product in step 1620 to form a finished surface covering unit. If the sheet good is not to be used on a surface covering unit and is to be used as a magnetic underlayment, a magnetization step may be performed on the sheet good to form a magnetic underlayment "A" layer.

For both the process 1500 in FIG. 15 and the process 1600 in FIG. 16, the micron size of the strontium ferrite compound is approximately 38-62 microns. This size is the preferred micron size in all formulae for the magnetic underlayment "A" layer and magnetically receptive "B" layer.

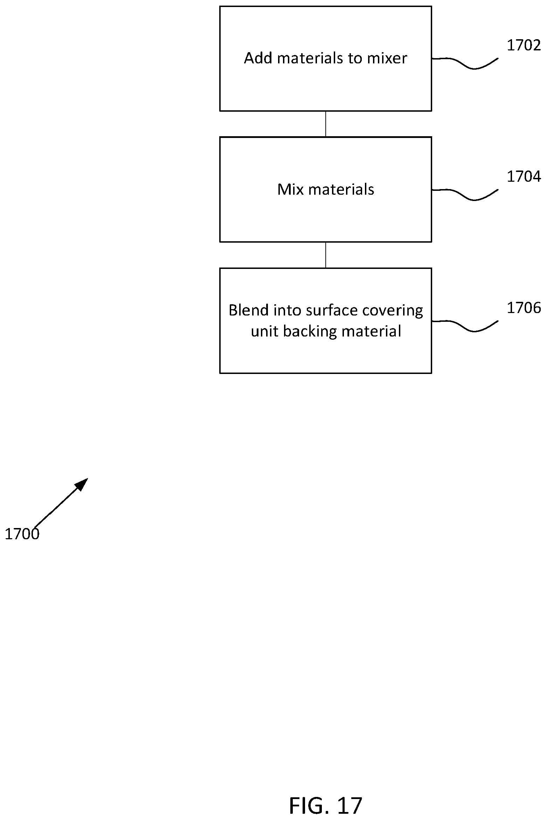

With reference now to FIG. 17, a process 1700 for producing a magnetized or magnetically receptive material for use in a backing material layer is provided. For some building materials, such as with carpet tile, the magnetically receptive "B" layer of the interchangeable box system is not made into a sheet good, but is blended directly into the backing system that makes up a building material that uses like polymers. An example of one such formula that may be incorporated into a PVC backing carpet tile is 16.5% PVC, 39% calcium carbonate, 26.5% iron powder (Fe3O4), 16% plasticizer DOP (Bis2-Ethylhexyl Phthalate), or DINP (Diisononyl Phthalate), and 2% viscosity depressant & stabilizer. In this process, materials to produce the magnetized or magnetically receptive material for use in a backing material layer are introduced into a mixer in step 1702. The materials are then mixed in a manner such as is described in step 1504 in FIG. 15, or step 1604 in FIG. 16. The mixed material is then blended into a backing of a surface covering unit in step 1706 to produce a finished surface covering unit having a magnetized or magnetically receptive backing layer.

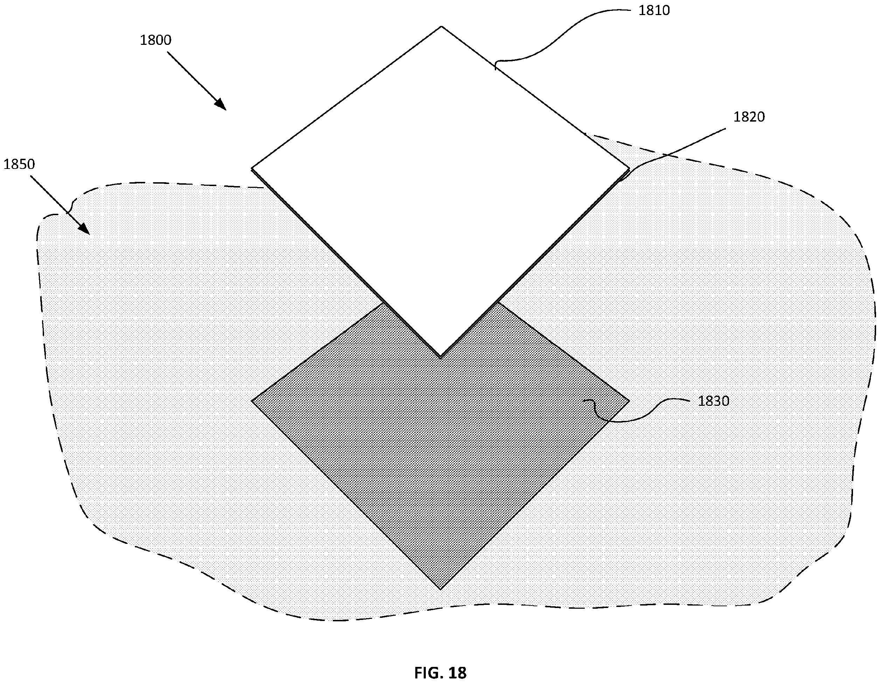

With reference now to FIG. 18, a simplified perspective diagram 1800 of a modular surface covering unit 1810 with a magnetically receptive layer 1820 and a magnetic underlayment 1830 disposed on a supporting surface 1850 is provided. The modular surface covering unit 1810 may be, for example, a floor covering unit such as a LVT, stone tile, or a carpet tile. With the LVT floor covering unit, the magnetically receptive layer 1820 would be hot pressed onto the LVT. For a stone tile, the magnetically receptive layer 1820 would be cold pressed onto the stone tile as it is a natural material. For the carpet tile, the magnetically receptive layer 1820 may be blended into the carpet backing as described in the process 1700 shown in FIG. 17. The magnetic underlayment layer 1830 is disposed on a supporting surface 1850 which may be a wall, floor, ceiling, or a movable supporting surface such as a trade show display but may also be any other suitable supporting surface. The magnetically receptive layer 1820 of the surface covering unit 1810 is magnetically attracted to the magnetic underlayment layer 1830 and secures the surface covering unit 1810 to the supporting surface 1850.

Magnetic Underlay and "Interchangeable Box" Surface Covering System

The present disclosure further provides a system and method for the manufacture of magnetic flooring and a method for installing a floor covering system that solves seaming and installation problems of prior art installation methods. The present invention comprises a two-component system comprising a magnetized underlay and an attracting floor covering unit. The present invention also provides a direction independent modular magnetic wall covering system that is a "complete construction system". The modular magnetic wall covering system of the present invention may be used to finish a wall without the need for additional components or layers.

Typically, when installing modular floor covering units onto a subfloor the modular floor covering units are directly applied to the subfloor, which may be a concrete substrate, or to a vapor barrier underlay already applied to the subfloor. The modular floor covering units are then adhered to either the subfloor using one of a variety of methods. In a first method, the modular floor covering units are completely glued down to the subfloor; this is the prevailing method. In a second method, a clip connector system, which may be called a "floating floor", is used. Examples of floating floor systems include Scott et al. and Lautzenhiser et al. described hereinabove. In the floating floor installation method, the floor covering unit is not adhered or attached to the substrate or subfloor but is instead attached to adjacent floor covering units using a connector, e.g., a carpet clip. The present invention uses a magnetic underlay that may comprise a two or three-layer underlayment but may also comprise other layer configurations.

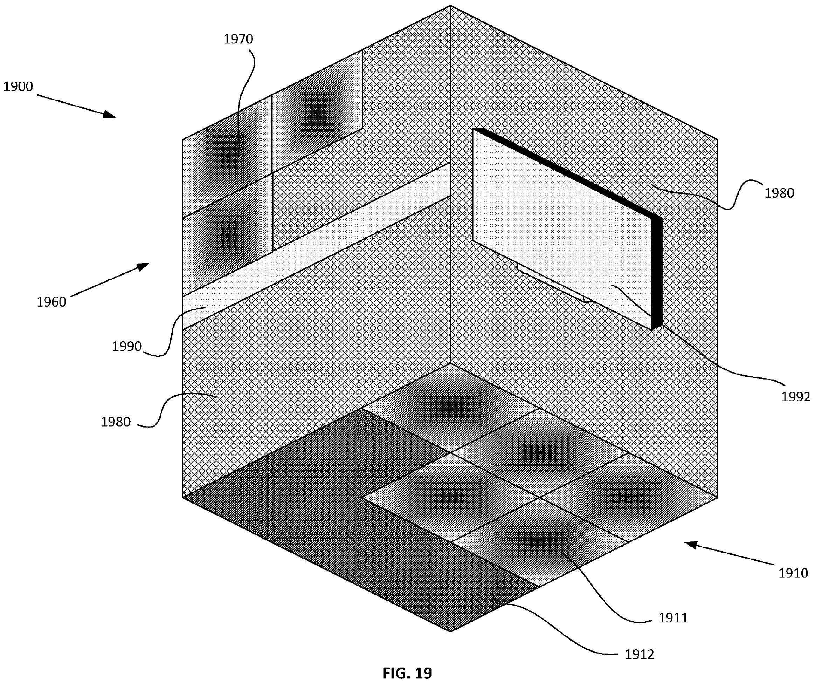

With reference now to Figure 19, a perspective view of a room having an interchangeable box system 1900 is provided. The interchangeable box system 1900 combines features of the wall covering system 1960 and modular floor covering 1910. The magnetic underlayment 1980 on the walls is adapted to receive wall covering units 1970, trim pieces 1990, and may also be adapted to mount additional fixtures such as television 1992 either directly or by a frame or other supporting structure affixed to the television and magnetically secured on the underlayment 1980. The floor of the interchangeable box system 1900 comprises the underlayment 1912 and a set of floor covering layers 1911. A room implementing the interchangeable box system 1900 may have any aspect of the floors or walls changed and redecorated with minimal effort and would not require demolition or tear down of existing decorations or fixtures. To construct a room with the interchangeable box system 1900 a support layer 1990 would be attached to a wall frame. The magnetic underlayment 1980 could be attached to the support layer, the support layer could be impregnated with a magnetic component, a magnetic underlayment 1980 could be laminated to the exterior of the support layer 900, or the support layer 1990 could be fully coated in a magnetically attractive coating. Wall covering units 1970, trim pieces 1990, and other fixtures may then be magnetically, semi-permanently, and releaseably secured to the magnetic underlayment 1980. The underlayment 1912 for the modular floor covering 1910 may be secured to a supporting surface as described hereinabove. Floor covering units 1911 may then be placed on the underlayment 1912. Additionally, a magnetic underlayment may be attached to a ceiling in a similar manner to the underlayment 1980 on the walls. Ceiling tiles may be secured to the ceiling underlayment in a similar manner to the wall covering units 1970.

The magnetic underlayment 1980 and underlayment 1912 may have the following properties: thickness of 0.060 inches (1.52 mm), hardness of Shore D60, specific gravity of 3.5, a shrinkage 1.5% caused by heating at 158F for seven days, tensile strength of 700 psi (49 Kg/cm^2), and may have parallel poles (north south) along the length at 2.0mm intervals. The floor covering unit 1911 and wall covering unit 600 may have a magnetically isotropic receptive material laminated onto the surface to be placed on the underlayment 1912 or magnetic underlayment 1980 respectively while the underlayments may either use an anisotropic or istropically magnetized flexible layer laminated onto or incorporated in the underlayment at the time of manufacture. Specifically, the manufacturing process described in U.S. Published Application US2016/0375673 may be used to manufacture the magnetic underlayment for use in the system. Specifically, the process may use pulse magnetization to isotroprically magnetize the underlayment 1912 or magnetic underlayment 1980. Pulse magnetization utilizes a coil and a set of capacitors to create short "pulse" bursts of energy to slowly increase the magnetic field and to completely penetrate the underlayment 1912 or magnetic underlayment 1980. The pulse magnetization may also be used to anisotropically magnetize the underlayment 1912 or magnetic underlayment 1980 if desired.

If the magnetically attractive layer is incorporated into the underlayment 1912 or underlayment 1980, a dry mixture of strontium ferrite powder and rubber polymer resin (e.g., rubber, pvc, or other like materials to make a thermoplastic binder), is mixed, calendered and ground then formed by a series of rollers to give it the correct width and thickness. The material is then magnetized on one side only.

The magnetic performance of bonded magnets is limited by the amount of polymer used (typically between 20-45% by volume) as this significantly dilutes the remanence of the material. In addition, the melt-spun powder has an isotropic microstructure. The dilution effect is overcome by incorporating an anisotropic magnetic powder. By inducing texture in the magnetic powder or milling it to a fine micrometer-scale particle size, and then preparing the magnet in an aligning field, the bonded magnet can then have an enhanced remanence in a particular direction. The magnetic underlayment, such as underlayment 1912 or underlayment 1980, is magnetized directionally to give it a stronger remanence. However, the magnetically receptive sheeting is not pole oriented and therefore does not need to be oriented in any one direction. The optimal temperature range for long term durability of the underlayment 1912 or underlayment 1980 is from 95C to -40C.

For an extruded flexible magnet, the flexible granular material is heated until it begins to melt and is then forced under high pressure using a screw feed through a hardened die which has been electrical discharge machine (EDM) wire eroded to have the desired shape of the finished profile. Flexible magnets can be extruded into profiles which can be coiled into rolls and applied or combined as shown in Figures 4 and 5. The non-magnetized face of a flexible magnet may be laminated with a double sided adhesive tape or laminated with a thin vinyl coating so that a printed layer may be applied. An attached cushion may also be applied for flooring purposes. Anisotropic permanent flexible magnets may have a Residual Magnetic Flux Density (Br) of T(G): 0.22 to 0.23 or (2250 - 2350) and a Holding Power (BHC) of 159 to 174 kA/m or 2000-2180 (Oe) while Isotropic permanent flexible magnets have a residual magnetic flux density (Br) of 0.14 to 0.15 T or 1400 - 1550 (G) and a holding power(BHC) of 100 to 111 kA/m or 1250 - 1400 (Oe). An Anisotropic permanent flexible magnet may be 40% stronger in magnetic remanence then an Isotropic one.

For the floor covering units 1911 and wall covering units 1970, the magnetically receptive material of the attractant layer or semi-solid compound may have the following properties: a thickness of 0.025 inches (0.64mm), a hardness of Shore D60, a specific gravity of 3.5, a shrinkage 1.5% caused by heating at 158F for seven days, tensile strength of 700 psi (49 Kg/cm^2), and a hold strength of 140grams/cm^2.

In the interchangeable box system 1900 all components are "quasi" permanently secured to the underlayment. Due to the immense surface area the magnetic resonance between the underlayment 1912 or underlayment 1980 and the floor covering unit 1911 or wall covering unit 1970, the materials have an extremely strong bond, making the installation "quasi" permanent. However, the bond may be broken by "catching" a corner and prying upwards to break the bond, thereby allowing the floor covering unit 1911 or wall covering unit 1970 to be changed on demand, something currently unavailable with any existing technology. In the interchangeable box system 1900, any building material with a flat backing (for optimal magnetic remanence) can be utilized in this system. A floor covering unit 1911 made from wood, for example, may also be utilized as a wall covering unit 1970 or vice versa.

The ability to remove any piece at any given time during the construction process is highly desirable. If a wall panel 1970 in the interchangeable box system 1970 does not match correctly or needs to be trimmed, as may be the case in many installations, one can simply remove a wall piece 1970 and reattach on demand with no abatement.

In the Flooring industry, the prevailing method of seaming a rolled carpet requires affixing a tack strip on the perimeter of the room, hot melt taping the seams and stretching or "tensioning" the rolled floor covering to keep the product in place. This allows for product failure by the actual carpet delaminating due to tension (primary backing of the flooring pulling away from the secondary backing), heat distortion of the finished goods, peaking of the seam, etc. There are many ways that the conventional method can fail. The system 1900 eliminates these failures and eliminates the need for tackstrip, as the floor covering unit 1911 no longer has to be tensioned. Magnetic remanence due to immense surface area, prevents the floor covering unit 1911 from "peaking" or moving under stress.

In the event that an existing wall or a new construction wall has a defect; such as a bow or concave limiting magnetic remanence, one could simply use a double sided magnetically receptive and magnetic backed shim to alleviate the problem as an accessory to the interchangeable box system. The floor covering units 1911 and wall covering units 1970 can provide different designs, logos, textures, colors, acoustic properties, reflective properties, or design elements in a room. The floor covering units 110 and wall covering units 1970 may also incorporate corporate or other branding or sponsorship information and may be used for advertising or as signage. Homeowners, business owners, or designers may change out any aspect of any room using the interchangeable box system 1900 on demand at any time.

The flexible nature of the interchangeable box system 1300 would also provide benefits in the film, television, and theatre industries. In these industries, TV sets, movie sets and the like are built in a modular fashion and typically emulate a real location in a more cost-effective manner. Unfortunately, these sets are built for their specific use on a frame and then that frame must be stored for another "like" use of the same set or a new set must be built each and every time to suit the scene. With the interchangeable box system 1300, it would be highly cost effective and highly beneficial to change the scene of a room on demand utilizing the same frames. It is also cost effective in large studios that must have a western town set for a first scene and then a New York City set for another scene. The ability to use the same frames but change the wall coverings 700 and floor covering units 110 to simulate what is needed would be desirable and cost effective.

While the invention has been described by reference to certain preferred embodiments, it should be understood that numerous changes could be made within the scope of the appended claims. Also, the present invention is not to be limited in scope by the specific embodiments described herein. It is fully contemplated that other various embodiments of and modifications to the present invention, in addition to those described herein, will become apparent to those of ordinary skill in the art from the foregoing description and accompanying drawings. Thus, such other embodiments and modifications are intended to fall within the scope of the following appended claims. Further, although the present invention has been described herein in the context of particular embodiments and implementations and applications and in particular environments, those of ordinary skill in the art will appreciate that its usefulness is not limited thereto and that the present invention can be beneficially applied in any number of ways and environments for any number of purposes. Accordingly, the claims set forth below should be construed in view of the full breadht of the present invention as defined in the appended claims.

## Claims

1. A magnetically receptive surface covering unit (800, 900, 1100) for use in a magnetically interchangeable surface covering system, the surface covering unit comprising:
an outer surface protectant layer (802, 902, 1102);
a primary layer (804, 904, 1104) adapted to provide structure and support to the surface covering unit; and
a rust resistant and dimensionally stable magnetically receptive layer (812, 912, 1110) adapted to magnetically secure the surface covering unit to a magnetic underlayment, the magnetically receptive layer comprising:
a ferrite compound;
a plasticizer; and
a polymer;
**characterized in that** the surface covering unit further comprises
a flexible chlorinated polyethylene and iron ferrite sheet layer (808, 908, 1106).

2. The magnetically receptive surface covering unit of claim 1, wherein the outer surface protectant layer (802, 902, 1102) is one of a UV protectant layer or a urethane coating

3. The magnetically receptive surface covering unit of claim 1, wherein the primary layer (804, 904, 1104) comprises a hardwood layer.

4. The magnetically receptive surface covering unit of claim 1, wherein the primary layer (804, 904, 1104) comprises a hardwood wear layer and a ply layer.

5. The magnetically receptive surface covering unit of claim 1, wherein the surface covering unit further comprises a cushion layer (910, 1108).

6. The magnetically receptive surface covering unit of claim 1, wherein the primary layer (804, 904, 1104) comprises a wear layer and a polymer layer.

7. The magnetically receptive surface covering unit of claim 1, wherein the surface covering unit further comprises a fiberglass layer.

8. The magnetically receptive surface covering unit of claim 1, wherein the ferrite compound is strontium ferrite, the polymer is chlorinated polyethylene elastomer polymer (CPE), and the plasticizer is epoxidized soybean oil (ESBO).

9. The magnetically receptive surface covering unit of claim 8, wherein the strontium ferrite comprises a particle size of 38-62 microns.

10. The magnetically receptive surface covering unit of claim 1, wherein the composition of the magnetically receptive layer is selected from the group consisting of: pure iron powder (Fe) approximately 84%, chlorinated polyethylene elastomer polymer (CPE) approximately 15% and epoxidized soybean oil (ESBO) approximately 8%; Iron powder (Fe3O4) 90%, CPE 9% and plasticizer 1%; Mn-Zn (manganese/zinc) soft ferrite powder 90%, CPE 9% and plasticizer 1%; 20 portions of CPE, 150 portions of stainless iron powder; 30 portions of polyvinyl chloride, 18 portions of dioctyl terephthalate, 200 portions of stainless iron powder; or PVC 16.5%, calcium carbonate 39%, iron powder 26.5%, plasticizer 16%, and viscosity depressant & stabilizer 2%.

11. A removable, semi-permanent, magnetic surface covering system, the system comprising:
a magnetic underlayment; and
a surface covering unit according to any one of claims 1 to 10.

## Patentansprüche

1. Magnetisch aufnahmefähige Oberflächenbelagseinheit (800, 900, 1100) zur Verwendung in einem magnetisch austauschbaren Oberflächenbelagssystem, wobei die Oberflächenbelagseinheit Folgendes umfasst:
eine äußere Oberflächenschutzschicht (802, 902, 1102);
eine Primärschicht (804, 904, 1104), so ausgelegt, dass sie der Oberflächenbelagseinheit Struktur und Halt gibt; und
eine rostbeständige und formstabile magnetisch aufnahmefähige Schicht (812, 912, 1110), ausgelegt zum magnetischen Befestigen der Oberflächenbelagseinheit an einer magnetischen Unterlage, wobei die magnetisch aufnahmefähige Schicht ferner Folgendes umfasst:
eine Ferritverbindung;
einen Weichmacher; und
ein Polymer;
**dadurch gekennzeichnet, dass** die Oberflächenbelagseinheit ferner Folgendes umfasst:
eine flexible Folienschicht aus chloriertem Polyethylen und Eisenferrit (808, 908, 1106).

2. Magnetisch aufnahmefähige Oberflächenbelagseinheit nach Anspruch 1, wobei die äußere Oberflächenschutzschicht (802, 902, 1102) entweder eine UV-Schutzschicht oder eine Urethanbeschichtung ist.

3. Magnetisch aufnahmefähige Oberflächenbelagseinheit nach Anspruch 1, wobei die Primärschicht (804, 904, 1104) eine Hartholzschicht umfasst.

4. Magnetisch aufnahmefähige Oberflächenbelagseinheit nach Anspruch 1, wobei die Primärschicht (804, 904, 1104) eine Hartholz-Verschleißschicht und eine Lagenschicht umfasst.

5. Magnetisch aufnahmefähige Oberflächenbelagseinheit nach Anspruch 1, wobei die Oberflächenbelagseinheit ferner eine Polsterschicht (910, 1108) umfasst.

6. Magnetisch aufnahmefähige Oberflächenbelagseinheit nach Anspruch 1, wobei die Primärschicht (804, 904, 1104) eine Verschleißschicht und eine Polymerschicht umfasst.

7. Magnetisch aufnahmefähige Oberflächenbelagseinheit nach Anspruch 1, wobei die Oberflächenbelagseinheit ferner eine Glasfaserschicht umfasst.

8. Magnetisch aufnahmefähige Oberflächenbelagseinheit nach Anspruch 1, wobei die Ferritverbindung Strontiumferrit, das Polymer chloriertes Polyethylen-Elastomer-Polymer (CPE) und der Weichmacher epoxidiertes Sojabohnenöl (ESBO) ist.

9. Magnetisch aufnahmefähige Oberflächenbelagseinheit nach Anspruch 8, wobei das Strontiumferrit eine Teilchengröße von 38-62 Mikrometern aufweist.

10. Magnetisch aufnahmefähige Oberflächenbelagseinheit nach Anspruch 1, wobei die Zusammensetzung der magnetisch aufnahmefähigen Schicht ausgewählt ist aus der Gruppe bestehend aus: reinem Eisenpulver (Fe) zu etwa 84%, chloriertem Polyethylen-Elastomer-Polymer (CPE) zu etwa 15% und epoxidiertem Sojabohnenöl (ESBO) zu etwa 8%; Eisenpulver (Fe3O4) 90%, CPE 9% und Weichmacher 1%; Mn-Zn-(Mangan/Zink)-Weichferritpulver 90%, CPE 9% und Weichmacher 1%; 20 Teilen CPE, 150 Teilen rostfreiem Eisenpulver; 30 Teilen Polyvinylchlorid, 18 Teilen Dioctylterephthalat, 200 Teilen rostfreiem Eisenpulver; oder PVC 16,5%, Calciumkarbonat 39%, Eisenpulver 26,5%, Weichmacher 16% und Viskositätssenker & Stabilisator 2%.

11. Entfernbares, semi-permanentes, magnetisches Oberflächenbelagssystem, wobei das System Folgendes umfasst:
eine magnetische Unterlage; und
eine Oberflächenbelagseinheit nach einem der Ansprüche 1 bis 10.

## Revendications

1. Unité de recouvrement de surface à réception magnétique (800, 900, 1100) pour utilisation dans un système de recouvrement de surface magnétiquement interchangeable, l'unité de recouvrement de surface comprenant :
une couche protectrice de surface extérieure (802, 902, 1102) ;
une couche primaire (804, 904, 1104) conçue pour fournir une structure et un support à l'unité de recouvrement de surface ; et
une couche à réception magnétique, dimensionnellement stable et résistante à la rouille (812, 912, 1110) conçue pour fixer magnétiquement l'unité de recouvrement de surface à une sous-couche magnétique, la couche à réception magnétique comprenant :
un composé de ferrite ;
un plastifiant ; et
un polymère ;
**caractérisée en ce que** l'unité de recouvrement de surface comprend en outre :
une couche souple de feuille de polyéthylène chloré et de ferrite de fer (808, 908, 1106).

2. Unité de recouvrement de surface à réception magnétique selon la revendication 1, dans laquelle la couche protectrice de surface extérieure (802, 902, 1102) est une couche choisie parmi une couche protectrice contre les UV ou une couche d'uréthane.

3. Unité de recouvrement de surface à réception magnétique selon la revendication 1, dans laquelle la couche primaire (804, 904, 1104) comprend une couche de bois dur.

4. Unité de recouvrement de surface à réception magnétique selon la revendication 1, dans laquelle la couche primaire (804, 904, 1104) comprend une couche d'usure en bois dur et une couche à plis.

5. Unité de recouvrement de surface à réception magnétique selon la revendication 1, dans laquelle l'unité de recouvrement de surface comprend en outre une couche d'amortissement (910, 1108).

6. Unité de recouvrement de surface à réception magnétique selon la revendication 1, dans laquelle la couche primaire (804, 904, 1104) comprend une couche d'usure et une couche de polymère.

7. Unité de recouvrement de surface à réception magnétique selon la revendication 1, dans laquelle l'unité de recouvrement de surface comprend en outre une couche de fibres de verre.

8. Unité de recouvrement de surface à réception magnétique selon la revendication 1, dans laquelle le composé de ferrite est une ferrite de strontium, le polymère est un polymère élastomère de polyéthylène chloré (CPE) et le plastifiant est une huile de soja époxydée (ESBO).

9. Unité de recouvrement de surface à réception magnétique selon la revendication 8, dans laquelle la ferrite de strontium comprend une taille de particules de 38 à 62 microns.

10. Unité de recouvrement de surface à réception magnétique selon la revendication 1, dans laquelle la composition de la couche à réception magnétique est choisie parmi le groupe constitué de : poudre de fer (Fe) pure à environ 84 %, polymère élastomère de polyéthylène chloré (CPE) à environ 15 % et huile de soja époxydée (ESBO) à environ 8 % ; poudre de fer (Fe₃O₄) à 90 % ; CPE à 9 % et plastifiant à 1 % ; Mn-Zn (manganèse/zinc) et poudre de ferrite doux à 90 %, CPE à 9 % et plastifiant à 1 % ; 20 parties de CPE, 150 parties de poudre de fer en acier inoxydable; 30 parties de chlorure de polyvinyle, 18 parties de téréphtalate de dioctyle, 200 parties de poudre de fer en acier inoxydable ; ou PVC à 16,5 %, carbonate de calcium à 39 %, poudre de fer à 26,5 %, plastifiant à 16 % et dépresseur et stabilisateur de viscosité à 2 %.

11. Système de recouvrement de surface magnétique, semi-permanent et amovible, le système comprenant :
une sous-couche magnétique ; et
une unité de recouvrement de surface selon l'une quelconque des revendications 1 à 10.
